# EUROPÄISCHE PATENTSCHRIFT

(11) **EP 2 626 255 B1**
(45) Veröffentlichungstag und Bekanntmachung des Hinweises auf die Patenterteilung: **26.02.2014**
(21) Anmeldenummer: 13154464.5
(22) Anmeldetag: 07.02.2013
(51) Int. Cl.: B60R 21/237, B60R 21/231

(54) **Verfahren und Vorrichtung zum Falten eines Gassackes**
Method and device for folding an airbag
Procédé et dispositif destinés au pliage dýun airbag

(30) Priorität: 10.02.2012 DE 102012202033
(43) Veröffentlichungstag der Anmeldung: 14.08.2013
(73) Patentinhaber: Takata AG, 63743 Aschaffenburg (DE)
(72) Erfinder: Buchholz, Andre, 10249 Berlin (DE); Cyliax, Bernd, 19071 Brüsewitz (DE); Franke, Dirk, 13187 Berlin (DE)
(74) Vertreter: Baumgärtel, Gunnar

(56) Entgegenhaltungen:
- EP-A2- 1 145 920
- DE-A1- 19 535 564
- DE-A1-102007 043 936
- DE-A1-102008 061 693
- DE-A1-102009 033 561
- GB-A- 2 360 493
- US-B1- 6 250 675

## Beschreibung

Die Erfindung betrifft ein Verfahren zum Falten eines Gassackes eines Airbagmodules für ein Kraftfahrzeug nach dem Oberbegriff des Anspruchs 1 sowie eine Vorrichtung zum Falten eines solchen Gassackes nach dem Oberbegriff des Anspruchs 12.

Bei einem derartigen Verfahren wird der zu faltende Gassack auf einer Auflage als einer ersten Begrenzung eines Faltraumes angeordnet (und dort beispielsweise ausgebreitet) sowie mit einer von der Auflage beabstandeten Abdeckung als einer zweiten Begrenzung des Faltraumes überdeckt, so dass der Gassack (in dem Faltraum) zwischen der Auflage und der Abdeckung mit einem hierdurch vorgegebenen Höhenprofil zusammengefaltet werden kann. Hierzu dienen Faltelemente, z. B. in Form von Schiebern, die auf den Gassack einwirken können, um diesen zusammenzufalten, wenn der Gassack bestimmungsgemäß auf der Auflage angeordnet ist. Hierbei sind die Faltelemente vorteilhaft derart angeordnet, dass sie sich zunächst neben dem äußeren Rand des Gassackes befinden, wenn dieser bestimmungsgemäß auf der Auflage angeordnet ist. Mittels der Faltelemente wird der Gassack zusammengefaltet, indem zumindest ein Teil der Faltelemente unter Einwirkung auf die Gassackhülle, also insbesondere auf den Rand des auf der Auflage angeordneten Gassackes, zwischen der Auflage und der Abdeckung in Richtung auf das Innere des Gassackes verfahren werden.

Eine solche Faltung ist in Form einer Raff-Faltung bekannt, bei der der Gassack durch die Faltelemente zusammengerafft wird, so dass sich ein Faltenverlauf ergibt, der eine stark stochastische Ausprägung besitzt, wie etwa in der DE 195 35 564 A1 beschrieben. Diese Faltverfahren haben den Vorteil, dass der Faltprozess unkompliziert durch das Verschieben von Faltelementen/Schiebern durchgeführt werden kann und dass im gefalteten Zustand des Gassackes diejenigen Bereiche der Gassackhülle oben zu liegen kommen, also der Abdeckung der Faltvorrichtung gegenüberliegen, die sich auch zuvor beim bestimmungsgemäß auf der Auflage angeordneten (ausgebreiteten), noch ungefalteten Gassack oben befanden. Dies ermöglicht ein besonders schnelles Entfalten des Gassacks in einem Crash-Fall.

Darüber hinaus wird aber auch gefordert, dass der Gassack eines Airbagmodules zur Erfüllung seiner Rückhaltefunktion beim Aufblasen in einem Crash-Fall jeweils eine bestimmte, vorgebbare Position bezüglich des zu schützenden Fahrzeuginsassen einnimmt, die im Wesentlichen durch die Randbedingungen in einem jeweiligen Crash-Fall bestimmt ist. D. h., bei identischen Randbedingungen, wie etwa Fahrzeugtyp, Airbagmodulausführung und Crash-Bedingungen, soll die Positionierung des Gassackes eines bestimmten Airbagmodules in immer gleicher, reproduzierbarer Weise erfolgen. Ein bedeutender Einflussfaktor beim Entfalten und Positionieren des Gassackes sind dabei das zu seiner Faltung eingesetzte Verfahren sowie die hierfür verwandte Vorrichtung. Diese sollten dazu beitragen, dass bei einem bestimmten Modul-Typ und vorgegebenen Crash-Bedingungen in einer definierten Fahrzeugumgebung möglichst immer gleiche Bereiche der aufgeblasenen Gassackhülle an bestimmten Stellen relativ zu einem zu schützenden Fahrzeuginsassen positioniert sind.

Aus der EP 0 900 156 B1 sind ein Verfahren und eine Vorrichtung zur Faltung eines Gassackes für ein Airbagmodul bekannt, wonach in einem auf einer Auflage angeordneten Gassack zunächst mittels mindestens eines Faltschwertes eine Einschnürung gebildet wird, bevor der Gassack anschließend mittels Faltelementen, z. B. in Form von Schiebern, zusammengerafft wird. Zur Bildung der Einschnürung wirkt ein jeweiliges Schwert dabei von außen auf den Rand des Gassackes ein, schiebt also zur Bildung einer Einschnürung Bereiche der Hülle des Gassackes vor sich her. Wird dieses Verfahren an einem Gassack ausgeführt, der zwischen einer Auflage und einer Abdeckung angeordnet ist, so entsteht ein Gassackpaket, das in gefaltetem Zustand durchgängig eine einheitliche (identische) Falthöhe aufweist. Dies kann den Einbau des Gassackpaketes in das Gehäuse eines Airbagmodules erschweren, wenn in den Innenraum des Gehäuses weitere Modulkomponenten, wie z. B. ein Gasgenerator, hineinragen, so dass die im Gehäuse für die Unterbringung des Gassackpaketes zur Verfügung stehende Höhe variiert.

Aus der GB2360493 sind ein Verfahren und eine Vorrichtung zur Faltung eines Gassackes nach dem Oberbegriff des Anspruchs 1 bzw des Anspruchs 12 bekannt.

Der Erfindung liegt daher das Problem zugrunde, ein Verfahren und eine Vorrichtung zum Falten eines Gassackes für ein Airbagmodul zu schaffen, die zu einer verbesserten Anpassbarkeit und zugleich Reproduzierbarkeit des Faltergebnisses beitragen.

Dieses Problem wird erfindungsgemäß hinsichtlich des Verfahrens durch die Merkmale des Anspruchs 1 gelöst.

Danach ist bei einem gattungsgemäßen Faltverfahren weiterhin vorgesehen, dass der Platzhalter von der Abdeckung oder der Auflage in Richtung auf die jeweils gegenüberliegende dieser beiden Begrenzungen absteht und dabei von jener Begrenzung derart beabstandet ist, dass zwischen dem Platzhalter und der gegenüberliegenden Begrenzung ein Abschnitt des Faltraumes definiert wird, in welchem beim Falten des Gassackes ein gefalteter Teilbereich des Gassackes gebildet wird.

Dabei kann zudem vorgesehen sein, dass der Platzhalter sich (durchgängig) zwischen zwei Enden erstreckt und eine solche Länge aufweist, dass der bestimmungsgemäß auf der Auflage angeordnete Gassack nicht über die Enden des Platzhalters hinaus steht. Mit anderen Worten ausgedrückt, ragt der Platzhalter während des Faltens des Gassackes mit seinen Enden über je einen Randabschnitt des Gassackes hinaus.

Mit der erfindungsgemäßen Lösung wird zum einen erreicht, dass mittels des Platzhalters der Faltraum in unterschiedliche Bereiche unterteilt wird, welche beidseits des Platzhalters liegen und in welchen jeweils Teilbereiche des Gassackes separat gefaltet werden, wodurch im Ergebnis ein bestimmter Gassackbereich des zunächst auf der Auflage angeordneten Gassackes anschließend wiederum einen bestimmten, vorgebbaren Gassackbereich des zu einem Gassackpaket gefalteten Gassackes bildet. Ferner wird zwischen dem Platzhalter und der gegenüberliegenden, beabstandeten Begrenzung des Faltraumes (Auflage oder Abdeckung) ein weiterer Teilabschnitt jenes Faltraumes definiert, in welchem ein weiterer Teilbereich des Gassackes (Verbindungsbereich) gefaltet wird. Durch Wahl des Abstandes zwischen dem Platzhalter und der gegenüberliegenden Begrenzung des Faltraumes kann so gezielt ein Teil des bei der Faltung entstehenden Gassackpaketes als ein Gassackbereich mit reduzierter Höhe ausgebildet werden.

Weiter kann vorgesehen sein, dass der Platzhalter eine unterhalb der Auflage vorgesehene und durch eine Öffnung in der Auflage zugängliche Aufnahme für das gefaltete Gassackpaket, insbesondere in Form eines Modulgehäuses, kreuzt (überdeckt).

Gemäß einer Ausführungsform der Erfindung wird mindestens eines der Faltelemente beim Zusammenfalten des Gassackes entlang des Platzhalters verschoben. Hierbei kann weiter vorgesehen sein, dass jenes Faltelement durch den Platzhalter geführt wird. Hierzu kann das jeweilige durch den Platzhalter geführte Faltelement ersteren im Querschnitt U-förmig umgreifen.

Konkret kann das Faltverfahren so ausgeführt werden, dass zunächst zwei Faltelemente (ohne Führung durch den Platzhalter) aufeinander zu bewegt werden, um den Faltraum zusätzlich zu der oberen und unteren Begrenzung (gebildet durch Abdeckung und Auflage) auch an zwei weiteren Seiten (seitlich) zu begrenzen, und dass anschließend zwei weitere Faltelemente, von denen mindestens eines durch den Platzhalter geführt wird, aufeinander zu bewegt werden, um das Gassackpaket in dem nunmehr an vier Seiten begrenzten Faltraum in seinen endgültigen, kompaktierten Zustand zu überführen. Eine Verwendung U-förmiger Faltelemente für das durch den Platzhalter geführte Faltelementenpaar ermöglicht dabei die Erzeugung eines im Querschnitt U-förmigen Gassackpaketes.

Allgemein wird das erfindungsgemäße Verfahren vorteilhaft so ausgeführt, dass hierdurch ein im Querschnitt U-förmiges Gassackpaket gebildet wird. Dieses kann anschließend mittels eines (z. B. im Querschnitt ebenfalls U-förmigen) Packstempels in eine zugehörige Aufnahme unterhalb der Auflage, z. B. in ein Modulgehäuse, gedrückt werden. Die Orientierung des beim Falten gebildeten U-förmigen Gassackpaketes ist dabei vorteilhaft derart, dass die Basis des Gassackpaketes zuerst in die Aufnahme gedrückt wird und die Schenkel des Gassackpaketes von jener Aufnahme weg von der Basis abstehen.

Die Basis des Gassackpaketes weist dabei außerhalb der Schenkel vorteilhaft eine solche Höhe auf, dass diese in etwa der Höhe entspricht, die der oberhalb eines in der Aufnahme (z. B. einem Modulgehäuse) angeordneten Gasgenerators zur Verfügung stehenden Höhe des Gehäuseinnenraums entspricht. Und die Schenkel des Gassackpaketes weisen wiederum eine solche Breite und/oder Höhe auf, dass hiermit gerade der Innenraum der besagten Aufnahme (Modulgehäuse) neben dem Gasgenerator ausgefüllt werden kann.

Eine Vorrichtung zum Falten eines Gassackes für ein Airbagmodul, mit der sich das erfindungsgemäße Verfahren ausführen lässt, ist durch die Merkmale des Anspruchs 12 charakterisiert.

Weiterbildungen der Vorrichtung sind in den hiervon abhängigen Ansprüchen angegeben.

Weitere Einzelheiten und Vorteile der Erfindung werden bei der nachfolgenden Beschreibung eines Ausführungsbeispieles anhand der Figuren deutlich werden.

Es zeigen:
- Fig. 1A: einen Gassack eines Airbagmoduls für Kraftfahrzeuge im entfalteten Zustand, positioniert zum Schutz eines Fahrzeuginsassen;
- Fig. 1B: das Airbagmodul aus Figur 1A mit darin befindlichem, gefalteten Gassack;
- Fig. 2A - 2E: fünf Faltschritte beim Falten eines auf einer Auflage angeordneten Gassackes zur Bildung eines Gassackpaketes, das im Gehäuse eines Airbagmodules verstaubar ist;
- Fig. 3A - 3C: drei Schritte beim Verstauen eines nach den Figuren 2A bis 2E gefalteten Gassackpaketes in einem Modulgehäuse;
- Fig. 4A - 4D: vier Faltschritte beim Falten eines Gassackes zur Bildung eines Gassackpaketes, wobei im Faltraum ein Platzhalter vorgesehen ist, entlang dem mindestens eines der zur Faltung verwendeten Faltelemente verfahren wird;
- Fig. 5A - 5D: vier Schritte beim Verstauen eines nach den Figuren 4A bis 4D gefalteten Gassackes in einem Modulgehäuse;
- Fig. 6A und 6B: eine Abwandlung der Anordnung aus den Figuren 4A und 4B hinsichtlich der Ausgestaltung des Platzhalters.

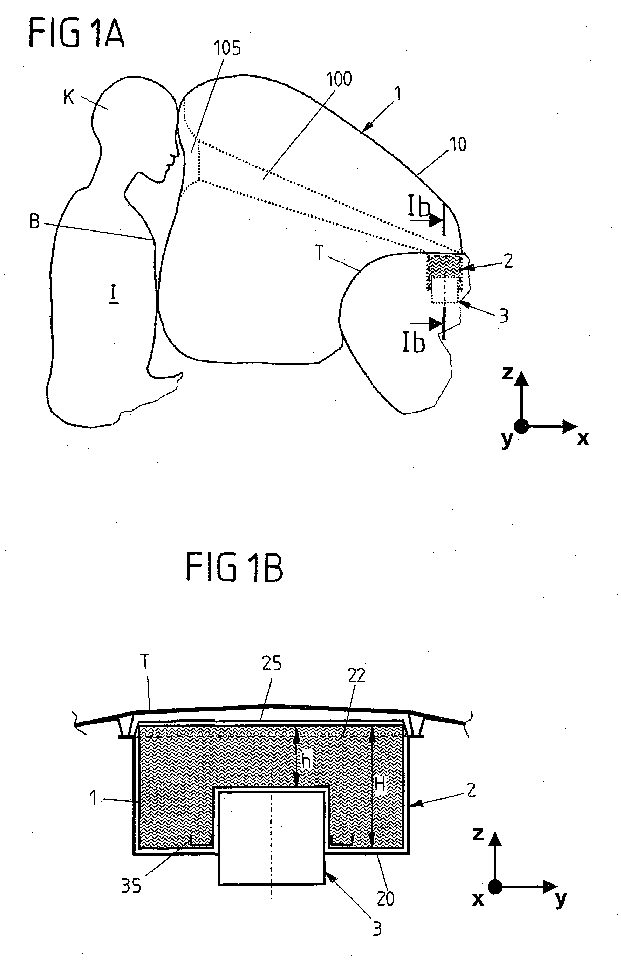

Figur 1A zeigt in einer Seitenansicht einen Gassack 1 eines Airbagmodules, der zum Schutz eines Fahrzeuginsassen I mittels eines Gasgenerators 3 aufgeblasen wurde und sich in vollständig entfalteter Form vor den zu schützenden Fahrzeuginsassen I befindet.

Konkret handelt es sich vorliegend um ein sogenanntes Beifahrer-Airbagmodul mit einem Modulgehäuse 2, welches hinter der Instrumententafel T eines Kraftfahrzeugs angeordnet ist und in welchem ein Gasgenerator 3 zum Aufblasen des ursprünglich in gefalteter Form im Modulgehäuse 2 angeordneten Gassackes 1 vorgesehen ist.

Um eine bestmögliche Schutzwirkung für den Fahrzeuginsassen I zu gewährleisten, sollen sich bestimmte Bereiche des mit Gas befüllten, entfalteten Gassackes 1 in einer definierten Lage bezüglich jenes Insassen I befinden. So ist im Ausführungsbeispiel mittels im Inneren des Gassackes 1 verlaufender Fangbänder 100, welche unterschiedliche Abschnitte der Gassackhülle 10 verbinden, eine Einbuchtung 105 im Gassack 1 gebildet, die sich vor dem Kopf K des zu schützenden Fahrzeuginsassen I befindet und weiterhin auch ein unmittelbares Anschießen der Brust B verhindert.

Die vorstehend beschriebene Lage der Einbuchtung 105 bezüglich des Fahrzeuginsassen I ist dabei nur ein Beispiel dafür, dass für eine optimale Schutzwirkung des Gassackes 1 jeweils bestimmte Gassackbereiche - reproduzierbar - bezüglich eines zu schützenden Fahrzeuginsassen I positioniert sein sollen, wenn der Gassack 1 bestimmungsgemäß durch den Gasgenerator 3 aufgeblasen worden ist und sich zum Schutz des Fahrzeuginsassen I entfaltet hat.

Figur 1 B zeigt einen Schnitt durch das Airbagmodul der Figur 1 in einem Zustand, in dem sich der Gassack 1 noch als gefaltetes Gassackpaket innerhalb des Modulgehäuses 2 befindet, und zwar einen Schnitt entlang der yz-Ebene, welche durch die vertikale Fahrzeugachse z sowie die horizontale Fahrzeugquerachse y aufgespannt wird und welche senkrecht zur Fahrzeuglängsachse x (Vorwärtsfahrtrichtung) orientiert ist.

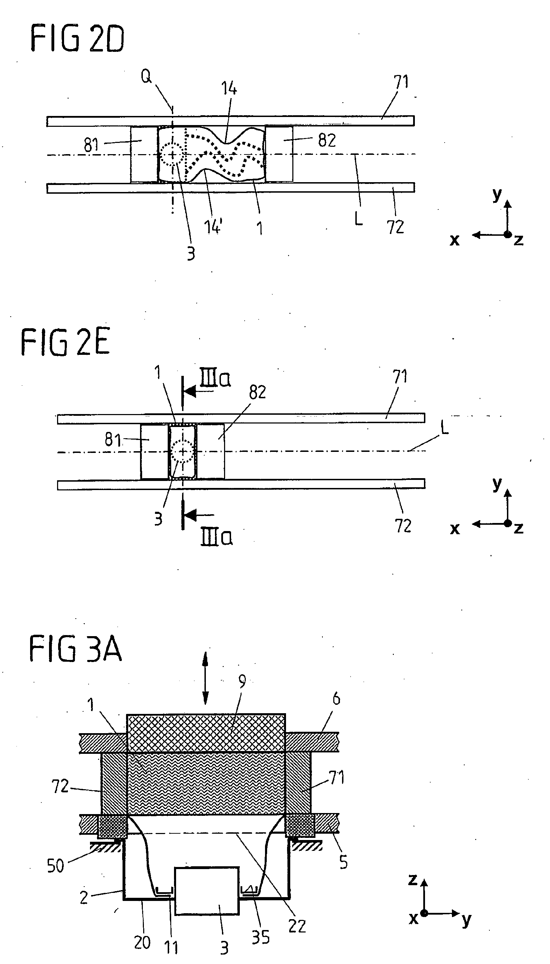

Gemäß Figur 1 B ist das Modulgehäuse 2 unterhalb einer Instrumententafel T angeordnet und weist eine der Instrumententafel T zugewandte Öffnung 22 auf, durch die der Gassack 1 zum einen in gefalteter Form in das Modulgehäuse 2 einbringbar ist und durch die hindurch er andererseits beim Aufblasen mittels des Gasgenerators 3 aus dem Modulgehäuse 2 austreten kann. Der Gassack 1 ist hier (in üblicher Weise) am Rand einer Einblasöffnung 11, vergl. Figur 3A, über die Gas aus dem Gasgenerator 3 in den Gassack 1 eintreten kann, durch Haltemittel 35, z. B. in Form eines Halteblechs, am Modulgehäuse 2 befestigt. Der Gasgenerator 3 ragt dabei (am Boden 20 des Modulgehäuses 2) derart in das Modulgehäuse 2 hinein, dass er mit seinem in das Modulgehäuse 2 vorstehenden Abschnitt zugleich auch (durch die Einblasöffnung 11 hindurch) in das Innere des Gassackes 1 ragt.

Im Bereich der Öffnung 22 des Modulgehäuses 2 ist das im Modulgehäuse 2 befindliche Gassackpaket von einer Abdeckung 25, z. B. in Form einer Abdecklage, gebildet durch eine Folie oder eine Gewebelage, abgedeckt bzw. überspannt. Diese ist beim Aufblasen und Entfalten des Gassackes 1 unter der Wirkung der hierbei auftretenden Kräfte zerstörbar (aufreißbar), so dass sie einem Austritt des Gassackes 1 durch die hierfür vorgesehene Öffnung 22 des Modulgehäuses 2 hindurch nicht entgegensteht.

In entsprechender Weise ist derjenige Bereich der Instrumententafel T, der sich oberhalb der Öffnung 22 des Modulgehäuses 2 erstreckt, so ausgeführt, dass er beim Aufblasen und Entfalten des Gassackes 1 eine Öffnung freigibt, durch die hindurch der Gassack 1, wie in Figur 1A dargestellt, in Richtung auf den zu schützenden Fahrzeuginsassen I austreten kann.

Anhand Figur 1B ist erkennbar, dass der in das Innere des Modulgehäuses 2 hineinragende Gasgenerator 3 den dort für den zu einem Gassackpaket gefalteten Gassack 1 zur Verfügung stehenden Unterbringungsraum einschränkt. So steht für das Gassackpaket im Bereich oberhalb des Gasgenerators 3 lediglich eine reduzierte Höhe h bis zur Abdeckung 25 zur Verfügung, verglichen mit der entsprechenden Höhe H in den Bereichen des Modulgehäuses 2 neben dem Gasgenerator 3, der hier beispielhaft als sogenannter stehender (kreiszylinderförmiger) Topfgasgenerator ausgeführt ist. Alternativ zu einem topfförmigen, stehenden Gasgenerator kann zum Aufblasen des Gassackes 1 beispielsweise auch ein liegender Rohrgasgenerator, eine Mehrzahl kleinerer Generatoren oder ein in sonstiger Weise geometrisch geformter Gasgenerator vorgesehen sein. Die vorliegende Darstellung bezieht sich daher nur beispielhaft auf einen einzelnen, stehend im Modulgehäuse 2 angeordneten Gasgenerator 3.

Hinzu kommt im Ausführungsbeispiel, dass insbesondere entlang der Fahrzeuglängsachse x, vergleiche Figur 1A, der Abstand zwischen der Außenwand des Gasgenerators 3 und der Innenwand des Modulgehäuses 2 so gering ist, dass die dortigen Bereiche im Modulgehäuse 2 nicht als Unterbringungsraum für das Gassackpaket zur Verfügung stehen.

Es ist daher ein Ziel, einen Gassack 1 so zu einem Gassackpaket zu falten, dass dieses einerseits in einem Modulgehäuse 2 unterbringbar ist, dessen Innenraum durch (hineinragende) Bereiche eines Gasgenerators 3 und/oder gegebenenfalls weitere Modulkomponenten strukturiert und beschränkt ist, wobei andererseits beim Entfalten des Gassackes gewährleistet sein soll, dass (reproduzierbar) bestimmte Gassackbereiche in bestimmter Weise bezüglich der Fahrzeugumgebung sowie eines zu schützenden Fahrzeuginsassen positioniert werden.

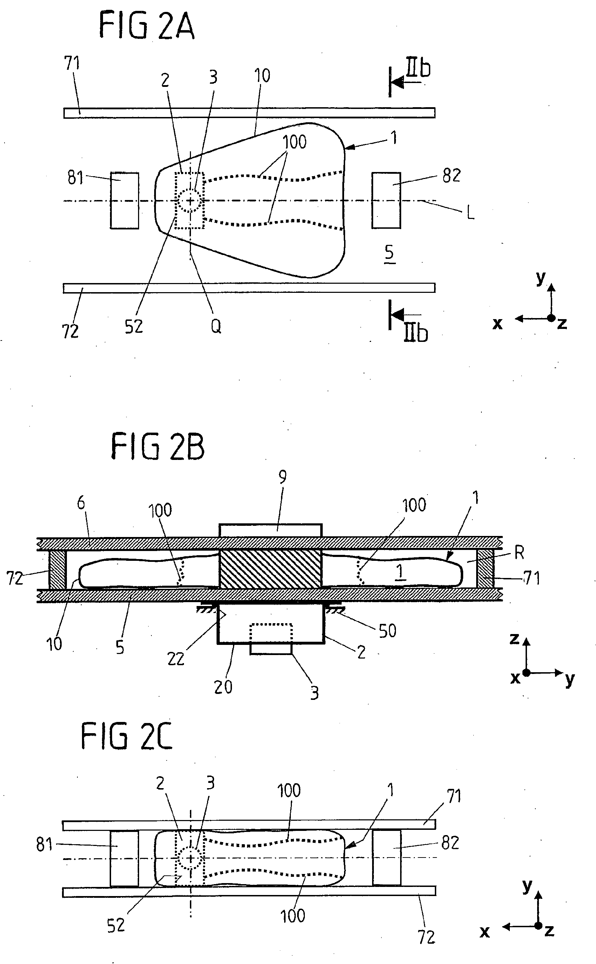

In den Figuren 2A bis 2E ist prinzipiell ein Vorgehen beim Falten eines Gassackes 1 mittels Faltelementen dargestellt, die vom Rand des Gassackes 1 her in Richtung auf dessen Inneres bzw. dessen Zentrum verfahren werden, um den Gassack 1 zu einem Paket zusammenzufalten. Die in den Figuren 2A bis 2E angedeuteten Achsen x, y, z eines Koordinatensystems sind vorliegend so gewählt, dass sie - bezogen auf das Modulgehäuse 2 - in gleicher Weise orientiert sind wie die Fahrzeuglängsachse x, die horizontale Fahrzeugquerachse y und die vertikale Fahrzeugachse z nach dem Einbau des Modulgehäuses 2 in ein Kraftfahrzeug, wie in Figur 1A und 1 B dargestellt.

Die Figuren 2A und 2B zeigen dabei eine Faltvorrichtung zum Falten eines Gassackes 1 in einer Draufsicht (Figur 2A) und einem Querschnitt (Figur 2B), zusammen mit dem zu faltenden Gassack 1.

Die Faltvorrichtung umfasst als untere Begrenzung eines Faltraumes R eine Auflage 5, auf der der Gassack 1 (in einem ausgebreiteten Zustand) angeordnet ist, sowie als zweite, obere Begrenzung eine Abdeckung 6, die der Auflage 5 gegenüberliegend angeordnet ist und die zusammen mit der Auflage 5 den Faltraum R definiert, in dem sich der zu faltende Gassack 1 befindet, wenn er bestimmungsgemäß auf der Auflage 5 angeordnet ist und die Abdeckung 6 der Auflage 5 gegenüberliegend positioniert ist. Im Ergebnis definieren die Auflage 5 und die Abdeckung 6 einen Faltraum R für den zu faltenden Gassack 1 mit einem bestimmten Höhenprofil, das durch den Abstand zwischen Auflage 5 und Abdeckung 6 gegeben ist (wobei diese gegebenenfalls auch ortsabhängig variieren kann). Die Auflage 5 kann dabei insbesondere durch die Oberfläche eines Falttisches zum Falten von Gassäcken gebildet werden.

Zum Falten des auf der Auflage 5 angeordneten Gassackes 1 zu einem Gassackpaket sind Faltelemente 71, 72; 81, 82, im Ausführungsbeispiel in Form von Schiebern, vorgesehen, die vor Beginn des Faltprozesses, wie in den Figuren 2A und 2B dargestellt, jeweils neben bzw. vor einem Randabschnitt des Gassackes 1 bzw. der Gassackhülle 10 liegen.

Die Faltelemente 71, 72; 81, 82 sind im Ausführungsbeispiel einander paarweise gegenüberliegend angeordnet; und die Faltelemente 71, 72 bzw. 81, 82 eines Paares sind jeweils entlang einer Faltachse Q (Querachse) bzw. L (Längsachse) zueinander verfahrbar, und zwar in Richtung auf das Innere des bestimmungsgemäß auf der Auflage 5 angeordneten, zu faltenden Gassackes 1.

Die Faltelemente 71, 72; 81, 82 begrenzen den Faltraum R seitlich, also entlang der Raumrichtungen x, y, welche senkrecht zu der Raumrichtung z liegen, entlang der der Faltraum R durch die Auflage 5 und die Abdeckung 6 begrenzt wird. Weiterhin weisen die Faltelemente 71, 72; 81, 82 im Ausführungsbeispiel eine Höhe (senkrecht zu ihrer Verfahrrichtung, also entlang der z-Achse) auf, die im Wesentlichen dem Abstand zwischen Auflage 5 und Abdeckung 6 entspricht oder etwas geringer sein kann.

Unabhängig von der konkreten Ausgestaltung der Faltvorrichtung gemäß den Figuren 2A und 2B ist allgemein von Bedeutung, dass die Faltelemente 71, 72; 81, 82 derart in Richtung auf das Innere des Gassackes 1 verfahrbar sind, dass der Gassack 1 beim Verfahren zu einem Gassackpaket zusammengefaltet bzw. zusammengerafft wird. Das Verfahren der Faltelemente 71, 72; 81, 82 erfolgt dabei entlang der Auflage 5, auf der der Gassack 1 angeordnet ist. Die Höhe der Faltelemente 71, 72; 81, 82 (entlang der vertikalen Achse z) ist derart zu wählen, dass die Faltelemente 71, 72; 81, 82 zwischen der Auflage 5 und der Abdeckung 6 bewegt werden können.

Gemäß den Figuren 2A und 2B weist die Auflage 5 eine Öffnung 52 auf, hinter (unter) der ein Modulgehäuse 2 angeordnet (und z. B. von einer unterhalb der Auflage 5 befindlichen Aufnahme 50 gehalten) ist, dessen Öffnung 22 derart zu der Öffnung 52 der Auflage 5 liegt, dass der zu einem Gassackpaket gefaltete Gassack 1 durch jene beiden Öffnungen 22, 52 hindurch in das Modulgehäuse 2 eingefügt (eingedrückt) werden kann. Hierzu ist im Ausführungsbeispiel ein Packstempel 9 vorgesehen, der verfahrbar an der Abdeckung 6 angeordnet ist.

In das Modulgehäuse 2 ragt der Gasgenerator 3 oder alternativ eine der Form des Gasgenerators 3 entsprechende Attrappe hinein, so dass der Innenraum des Modulgehäuses 2 bereits an der Faltvorrichtung in gleicher Weise strukturiert ist wie im in ein Kraftfahrzeug eingebauten Zustand. Die Attrappe des Gasgenerators kann dabei auch ein Bestandteil der Aufnahme sein, mittels der das Modulgehäuse 2 unterhalb der Auflage 5 gehalten wird.

Der Gassack 1 ist im Ausführungsbeispiel der Figuren 2A und 2B derart auf der Auflage 5 angeordnet, dass sich (vor dem Falten) eine bezüglich der Querachse Q asymmetrische Verteilung von dessen Hülle 10 ergibt. Grundsätzlich kann der Gassack 1 in beliebiger Weise auf der Auflage 5 angeordnet werden, je nachdem, welches Faltergebnis angestrebt wird. Insbesondere kann neben einem komplett flachen Ausbreiten des Gassackes 1 auf der Auflage 5 auch vorgesehen sein, den Gassack 1 vorzufalten, bevor die Faltelemente 71, 72; 81, 82 hierauf einwirken, z. B. indem mindestens ein Gassackabschnitt nach der Anordnung des Gassackes auf der Auflage 5 umgeschlagen wird oder indem der Gassack in einem bereits vorgefalteten Zustand auf der Auflage 5 positioniert wird.

Üblicherweise wird zunächst der Gassack 1 bestimmungsgemäß auf der Auflage 5 angeordnet und gegebenenfalls ausgebreitet, bevor anschließend die Abdeckung 6 in einem definierten Abstand oberhalb der Auflage 5 positioniert wird, wodurch der Faltraum R in vertikaler Richtung z nach unten (durch die Auflage 5) und nach oben (durch die Abdeckung 6) begrenzt ist.

Anschließend werden die Faltelemente 71, 72 des ersten Paares vom Rand des Gassackes 1 her in Richtung auf dessen Inneres verfahren. Dies entspricht im Ausführungsbeispiel der Figuren 2A bis 2E einem Verfahren der Faltelemente 71, 72 in Form von Schiebern (in entgegengesetzter Richtung) entlang der Querachse Q. Die Verfahrbewegung der Faltelemente 71, 72 hat einen bestimmten, vorgebbaren Umfang, der beispielsweise dadurch festgelegt werden kann, dass bei Abschluss der Verfahrbewegung ein bestimmter, vorgebbarer Abstand zwischen den Faltelementen 71, 72 entlang der Verfahrachse y (Querachse Q) vorliegt.

Im Ausführungsbeispiel werden die Faltelemente 71, 72 des ersten Paares zueinander verfahren, bis deren Abstand der Ausdehnung der Faltelemente 81, 82 des zweiten Paares entlang der Verfahrrichtung y der Faltelemente 71, 72 des ersten Paares entspricht. Dabei weisen die Faltelemente 71, 72 des ersten Paares vorliegend eine solche Ausdehnung entlang der Auflage 5 und dabei quer zu ihrer Verfahrrichtung y, also entlang der x-Achse auf, dass sie in ihrer Endposition an den Faltelementen 81, 82 des zweiten Paares anliegen, wie in Figur 2C dargestellt. Hierdurch ist der den Gassack 1 aufnehmende Faltraum R allseitig umschlossen. Der Gassack 1 wird komplett von Komponenten der Faltvorrichtung umgeben.

Beim Verfahren der Faltelemente 71, 72 vom Rand des Gassackes 1 her in Richtung auf dessen Inneres erfolgt eine erste Komprimierung des Gassackes entlang der Verfahrrichtung y des ersten Paares an Faltelementen 71, 72, wie anhand des Überganges von Figur 2A zu 2C erkennbar.

Der Abstand der Faltelemente 71, 72 des ersten Paares zueinander in der Endposition, wie in Figur 2C dargestellt, ist dabei weiterhin so gewählt, dass er der Ausdehnung des Modulgehäuses 2 in dieser Richtung entspricht. Dies bedeutet wiederum, dass der bereits teilweise komprimierte Gassack 1 nach dem ersten Faltschritt entlang einer Richtung y eine Ausdehnung aufweist, die der Ausdehnung des Modulgehäuses 2 in dieser Richtung entspricht.

Anschließend werden die Faltelemente 81, 82 des zweiten Paares in Richtung auf das Innere des Gassackes 1 verfahren, wie in Figur 2D dargestellt. Die Faltelemente 81, 82 des zweiten Faltelementepaares werden hierbei im Ausführungsbeispiel ebenfalls entlang einer Faltachse (Längsachse L) aufeinander zu bewegt. Dabei hat in dem in Figur 2D gezeigten Zustand der Faltvorrichtung bereits ein Faltelement 81 seine Endposition erreicht, in der es am Rand der Öffnung 52 der Auflage 5 positioniert ist, während das andere Faltelement 82 noch substantiell hiervon beabstandet ist.

Der Faltraum R, in dem sich der Gassack 1 befindet, ist während der Verfahrbewegung der zweiten Faltelemente 81, 82 entlang aller Raumrichtungen y, z senkrecht zur Verfahrrichtung x der zweiten Faltelemente 81, 82 durch die Auflage 5, die Abdeckung 6 sowie die ersten Faltelemente 71, 72 begrenzt.

Wegen des Faltens des Gassackes 1 unter Einwirkung von Faltelementen 71, 72; 81, 82, die jeweils vom Rand des Gassackes 1 in Richtung auf dessen Inneres verfahren werden (so genannte Raff-Faltung), erzeugt der Faltprozess keine definiert reproduzierbaren Falten; sondern die im Gassack 1 gebildeten Falten weisen vielmehr eine tendenziell stochastische Ausprägung auf.

Weiterhin wird anhand Figur 2D deutlich, dass es beim Verfahren der Faltelemente 81, 82 zum Zwecke des Zusammenfaltens des Gassackes 1 zu einem Einknicken des bereits vorkomprimierten Gassackes 1, z.B. entlang der Ebene der Auflage 5, kommen kann, so dass sich Bereiche der Gassackhülle 10 und die in deren Inneren verlaufenden Fangbänder 100 entlang der Auflage 5, d.h. quer zu einer senkrecht zur Auflage 5 und durch die Längsachse L verlaufenden xz-Ebene verlagern und im Extremfall sogar auf die jeweils andere Seite der xz-Ebene gelangen können. Entsprechende Einknickungen des Gassackes 1 sind in Figur 2D beispielhaft bei Position 14 und 14' gezeigt.

Derartige Einknickungen 14, 14' können, je nach Ausprägung, dazu führen, dass das Entfalten des Gassackes 1 bei Aktivierung des zugehörigen Gasgenerators 3 ein von Fall zu Fall abweichendes Verhalten zeigt, also nicht die gewünschte Reproduzierbarkeit.

Figur 2E zeigt die Faltvorrichtung nach Abschluss des letzten Faltschrittes, so dass sich alle Faltelemente 71, 72; 81, 82 in ihrer Endposition befinden. In dieser grenzen die Faltelemente 71, 72; 81, 82 im Ausführungsbeispiel jeweils an die Öffnung 52 der Auflage 5 an, unterhalb der sich das Modulgehäuse 2 befindet.

Der Gassack 1 ist damit durch die Faltelemente 71, 72; 81, 82 zu einem Gassackpaket zusammengestaucht (zusammengefaltet bzw. zusammengerafft) worden, welches oberhalb der Öffnung 52 der Auflage 5 liegt und dessen Ausdehnung entlang der Auflage 5 im Ausführungsbeispiel mit dem Querschnitt jener Öffnung 52 zusammenfällt. Die Höhe des Gassackpaketes entlang der z-Achse (quer zur Auflage 5) ist dabei gegeben durch den Abstand der Abdeckung 6 von der Auflage 5 (bzw. allgemein das Höhenprofil des Faltraumes) Die Höhe des Gassackpaketes ist damit im Ausführungsbeispiel an allen Stellen oberhalb des Querschnittes der Öffnung 52 identisch.

In diesem Zustand kann der zu einem Paket zusammengefaltete Gassack 1 durch die Öffnung 52 der Auflage 5 hindurch in das darunter befindliche Modulgehäuse 2 eingeführt werden. Dies wird insbesondere dadurch ermöglicht, dass die Ausdehnung des zu einem Paket zusammengefalteten Gassackes 1 entlang der Auflage 5 der Ausdehnung des Modulgehäuses 2 in dieser Richtung entspricht. Weiterhin ist auch die Höhe des Gassackpaketes, welche durch den Abstand zwischen Auflage 5 und Abdeckung 6 vorgegeben wird, derart, dass der Gassack - unter Berücksichtigung der Höhe des Modulgehäuses 2 - hierin untergebracht werden kann.

Zum Einführen des Gassackpaketes in das Modulgehäuse 2 (unterhalb der Auflage 5) ist der in der Querschnittsdarstellung der Figur 2B erkennbare Packstempel 9 verwendbar, der sich senkrecht zur Auflage 5 (entlang der z-Achse) bewegen lässt, um das fertig gefaltete Gassackpaket durch die Öffnung 52 in der Auflage 5 hindurch in das Modulgehäuse 2 zu drücken. Der Packstempel ist hierzu entlang der besagten Richtung (z-Achse) beweglich an bzw. in der Abdeckung 6 gelagert, wie anhand Figur 3A erkennbar.

In seiner in Figur 3A gezeigten Ausgangsstellung liegt der Packstempel 9 der Öffnung 52 der Auflage 5 abdeckungsseitig gegenüber und ist derart in die Abdeckung 6 integriert, dass er gemeinsam mit dieser den zur Aufnahme des Gassackes 1 vorgesehenen Faltraum auf der der Auflage 5 gegenüberliegenden Seite begrenzt.

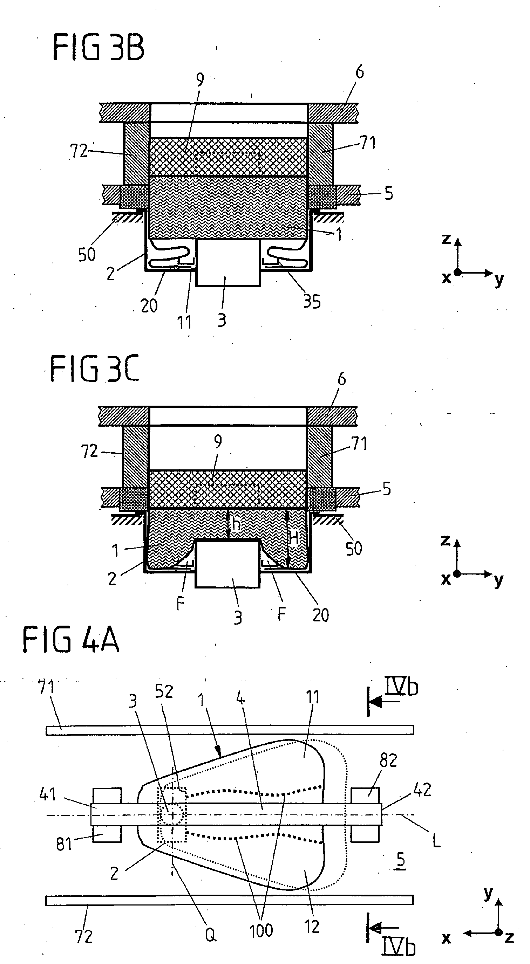

Durch Verfahren des Packstempels 9 quer zur Auflage 5 und in Richtung auf die Auflage 5 wird der unterhalb des Packstempels 9 als Gassackpaket angeordnete Gassack 1 in das Modulgehäuse 2 hineingedrückt, wie anhand des Überganges von Figur 3A zu Figur 3B erkennbar. Der Packstempel 9 weist hierzu Abmaße auf, die sein Verfahren zwischen den in ihrer Endstellung befindlichen Faltelementen 71, 72; 81, 82 ermöglichen, um das Gassackpaket in das Modulgehäuse 2 hineindrücken zu können. Weiterhin entspricht der Querschnitt des Packstempels 9 vorteilhaft in etwa dem Querschnitt der Öffnung 22 des Modulgehäuses 2 durch die hindurch der gefaltete Gassack 1 in das Modulgehäuse 2 einzubringen ist.

Figur 3C zeigt schließlich den Zustand nach dem vollständigen Einbringen des Gassackpaketes in das Modulgehäuse 2. Hieran wird zugleich noch eine weitere Problematik deutlich: Die für den (zu einem Gassackpaket konstanter Höhe) gefalteten Gassack 1 zur Verfügung stehende Höhe h, H im Modulgehäuses 2 variiert, je nachdem, ob es sich um einen Gehäusebereich oberhalb des Gasgenerators 3 oder neben dem Gasgenerator 3 handelt. Nur neben dem Gasgenerator stellt die volle Höhe H im Modulgehäuse 2 für das einzubringende Gassackpaket zur Verfügung; oberhalb des Gasgenerators 3 steht lediglich eine reduzierte Höhe h zur Verfügung, abhängig davon, wie weit der Gasgenerator 3 in das Modulgehäuse 2 hineinragt. Hierdurch müssen beim Eindrücken des Gassackpaketes in das Modulgehäuse 2 erhebliche Kräfte (durch den Packstempel 9) aufgebracht werden, um das Gassackpaket so zu deformieren, dass ursprünglich oberhalb des Gasgenerators 3 liegende Gassackbereiche in einen Bereich neben den Gasgenerator 3 verdrängt werden, wie anhand des Überganges von Figur 3B zu Figur 3C erkennbar.

Versuche haben jedoch gezeigt, dass dies nicht immer vollständig gelingt und neben dem Gasgenerator 3 Freiräume F entstehen können, die nicht zur Aufnahme von Gassackbereichen genutzt werden können. Das Bestehen der Freiräume F und die hiermit einhergehende unvollständige Raumausnutzung müssen durch eine entsprechende Vergrößerung des Innenraumes des Modulgehäuses 2 und damit des Modulgehäuses 2 insgesamt kompensiert werden, was zu Platzproblemen bei der Montage des Airbagmodules in einem Kraftfahrzeug führen kann.

In den Figuren 4A bis 4D ist eine Weiterbildung des vorstehend anhand der Figuren 2A bis 2E erläuterten Faltverfahrens dargestellt, wobei ein wesentlicher Unterschied darin besteht, dass die verwendete Faltvorrichtung zusätzlich einen Platzhalter 4 aufweist, der während des - nachfolgend zu beschreibenden - Faltvorganges sowohl die resultierende Faltung als auch die Form des entstehenden Gassackpaketes beeinflusst.

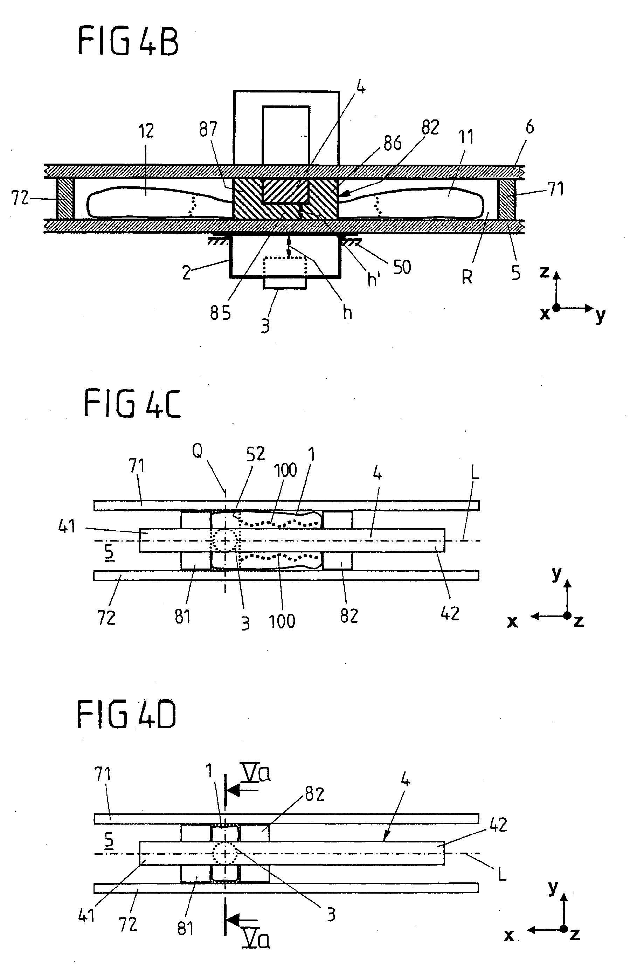

Der Platzhalter 4 wird derart in den Faltraum eingebracht, dass er entlang des Gassackes 1 verläuft und mindestens zwei Gassackbereiche 11, 12 unterschieden werden können, die auf unterschiedlichen Seiten des Platzhalters 4 liegen. Konkret wird der Platzhalter 4 im Ausführungsbeispiel, wie anhand Figur 4A und der zugehörigen Schnittdarstellung der Figur 4B erkennbar, von oben über dem auf der Auflage 5 angeordneten Gassack 1 positioniert, so dass beidseits des Platzhalters 4 jeweils ein Gassackbereich 11 bzw. 12 liegt.

Im Ausführungsbeispiel erstreckt sich der Platzhalter 4 (durchgängig) zwischen einem ersten Ende 41 und einem zweiten Ende 42 entlang der gesamten Ausdehnung des Gassackes 1. D. h., die beiden Enden des Platzhalters 4 ragen jeweils über einen (von zwei entlang der Erstreckungsrichtung des Platzhalters 4 einander gegenüberliegenden) Randabschnitt des Gassackes 1 hinaus.

Dabei ist der Platzhalter 4 vorliegend als ein separates Bauelement ausgeführt, welches im Faltraum R positioniert werden kann, bevor die Abdeckung 6 bestimmungsgemäß in einem definierten Abstand oberhalb der Auflage 5 angeordnet wird. Alternativ kann der Platzhalter 4 auch mit der Abdeckung 6 verbunden (und gegebenenfalls einstückig an dieser angeformt) sein, so dass der Platzhalter 4 beim bestimmungsgemäßen Anordnen der Abdeckung 6 oberhalb der Auflage 5 gleichzeitig innerhalb des Faltraumes R zwischen der Auflage 5 und der Abdeckung 6 positioniert wird.

Gemäß der in den Figuren 4A und 4B beispielhaft dargestellten Faltvorrichtung erstreckt sich der Platzhalter 4 bei bestimmungsgemäßer Anordnung innerhalb des Faltraumes R derart, dass die zweiten Faltelemente 81, 82 beim Verfahren in Richtung auf das Gassackinnere entlang des längserstreckten Platzhalters 4 bewegt werden. Konkret verläuft der Platzhalter 4 im Ausführungsbeispiel entlang der Verfahrrichtung x der zweiten Faltelemente 81, 82, also vorliegend entlang der Längsachse L.

Weiterhin ist gemäß dem Ausführungsbeispiel der Figuren 4A und 4B nicht nur vorgesehen, dass die zweiten Faltelemente 81, 82 entlang des Platzhalters 4 bewegbar sind, sondern sie werden vielmehr durch den Platzhalter 4 geführt. Hierzu stehen die Faltelemente 81, 82 jeweils entlang ihrer Verfahrrichtung x beweglich mit dem Platzhalter 4 in Eingriff.

Im Ausführungsbeispiel ist der verschiebliche Eingriff eines jeweiligen Faltelementes 81, 82 mit dem Platzhalter 4 dadurch realisiert, dass das jeweilige Faltelement 81, 82 den Platzhalter 4 U-förmig umgreift, beispielsweise einen U-förmigen Querschnitt aufweist, wie anhand Figur 4B erkennbar.

Ein jeweiliges am Platzhalter 4 geführtes Faltelement 81, 82 ist dabei räumlich derart orientiert, dass die Basis 85 des Faltelementes der Auflage 5 zugewandt ist und insbesondere hierauf aufliegt, während sich die Schenkel 86, 87 des jeweiligen Faltelementes von der Basis 85 in Richtung auf die der Auflage 5 gegenüberliegende Abdeckung 6 erstrecken. Das jeweilige Faltelement umgreift dabei mit seiner Basis 85 und seinen Schenkeln 86, 87 den Platzhalter 4 im Querschnitt U-förmig, wobei letzterer beispielsweise, wie in Figur 4A und 4B dargestellt, von der Abdeckung 6 her in den Faltraum R hineinragt (dabei aber wahlweise als ein separates Bauelement oder als ein mit der Abdeckung 6 verbundenes, gegebenenfalls auch einstückig hieran angeformtes, Bauelement ausgeführt sein kann).

Dass die beiden Faltelemente 81, 82 des zweiten Faltelementpaares entlang des Platzhalters 4 aufeinander zu bewegt werden sollen, bedeutet dabei nicht, dass zwingend beide Faltelemente 81, 82 tatsächlich entlang des Platzhalters 4 verfahren werden müssten. Vielmehr ist eine Relativbewegung der beiden Faltelemente 81, 82 zueinander maßgeblich. So zeigt Figur 4A in gepunkteter Darstellung eine mögliche alternative Anordnung des Gassackes 1, bei der sich der Gassack 1 mit seinem entlang der x-Achse betrachtet vorderen (linken) Rand bereits am Rand der Öffnung 52 der Auflage 5 befindet. Bei einer derartigen Positionierung des Gassackes 1 auf der Auflage 5 kann sich das jenem Randabschnitt zugeordnete Faltelement 81 bereits von Anfang an, also in seiner Ausgangsposition, zugleich in seiner Endposition befinden, da dann überhaupt keine Bewegung des besagten Faltelementes 81 notwendig wäre, um den zugeordneten Rand des Gassackes 1 zum Rand der Öffnung 52 der Auflage 5 zu bewegen. In diesem Fall ist allein ein Verfahren des gegenüberliegenden anderen Faltelementes 82 des zweiten Paares entlang des Platzhalters 4 erforderlich. Entsprechendes gilt für das erste Paar an Faltelementen 71, 72.

Sofern also vorliegend in der Beschreibung auf eine Bewegung der Faltelemente 71, 72 bzw. 81, 82 eines jeweiligen Paares an Faltelementen Bezug genommen wird, bedeutet dies, dass jedenfalls eine Relativbewegung der beiden jeweils betroffenen Faltelemente 71, 72 oder 81, 82 erfolgen soll, nicht aber das zwingend beide Faltelemente jeweils bewegt werden, obwohl dies in dem Ausführungsbeispiel der Figuren 4A bis 4C beispielhaft so dargestellt ist.

Wie anhand Figur 4B weiter erkennbar, ist der Abstand h' zwischen dem Platzhalter 4 und der Auflage 5 in etwa so groß wie die Höhe h, die im Inneren des Modulgehäuses 2 oberhalb des Gasgenerators 3 für den gefalteten Gassack 1 zur Verfügung steht. Wenn zudem die Breite des Platzhalters 4 senkrecht zur vertikalen Achse z in etwa mit der Ausdehnung des Gasgenerators 3 entlang jener Richtung y übereinstimmt, so kann beim Falten des Gassackes 1 unterhalb des Platzhalters 4 gezielt ein gefalteter (flacherer) Gassackbereich erzeugt werden, der im Modulgehäuse 2 oberhalb des Gasgenerators 3 anordenbar ist wie in Figur 4B dargestellt, wo die Ausdehnung des Platzhalters 4 entlang der y-Achse mit der Ausdehnung des Gasgenerators 3 in dieser Richtung übereinstimmt.

Nach einer Ausgestaltung der Faltvorrichtung kann der Platzhalter 4 senkrecht zu der vertikalen Achse z etwas breiter sein als der Gasgenerator 3, so dass die durch den Platzhalter 4 im Gassackpaket gebildete Aussparung zwischen den beiden Schenkeln 16, 17 auch dann noch breit genug ist, um den Gasgenerator 3 zu umschließen, wenn der Gassack 1 beim Verstauen des Gassackpaketes im Modulgehäuse 2 im Bereich seiner Schenkel 16, 17 etwas nach innen einfällt.

Selbstverständlich kann die Breite des Platzhalters 4 senkrecht zur vertikalen Achse z auch an andere oder weitere im Modulgehäuse 2 angeordnete bzw. hierin hineinragende Komponenten (als den Gasgenerator 3 bzw. dessen Attrappe) angepasst werden.

Weiterhin kann es unter bestimmten Umständen vorteilhaft sein, dass der Abstand h' zwischen dem Platzhalter 4 und der Auflage 5 etwas kleiner ist als der im Modulgehäuse 2 oberhalb des Gasgenerators 3 zur Verfügung stehende Raum. Eine Reduzierung des Abstandes h' zwischen Platzhalter 4 und Auflage 5 kann beispielsweise dann zweckmäßig sein, wenn anderenfalls die Gefahr bestünde, dass beim Falten undefiniert Gassackmaterial quer in den Raum unterhalb des Platzhalters 4 hineingedrückt würde, wie beispielsweise anhand Figur 2D für ein Faltverfahren ohne entsprechenden Platzhalter dargestellt. Denn eine wichtige Funktion des Platzhalters 4 besteht gerade darin, eine derartige Verlagerung von Abschnitten der Gassackhülle 10 (unter Bildung einer Eindrückung 14, 14'), wie in Figur 2D dargestellt, zu verhindern.

Dies wird dadurch erreicht, dass die beiden Gassackbereiche 11, 12, die bei der Anordnung gemäß den Figuren 4A und 4B beidseits des Platzhalters 4 angeordnet sind, im Wesentlichen unabhängig voneinander in Falten gelegt werden können, so dass eine unkontrollierte Verlagerung von Teilen der Gassackhülle 10 aus dem einen Gassackbereich 11 in den anderen Gassackbereich 12 hinein durch den Platzhalter 4 vermieden wird.

Eine Beziehung zwischen den beiden Bereichen 11, 12 des Gassackes 1, die beidseits des längserstreckten Platzhalters 4 liegen, besteht lediglich insoweit, als in dem vergleichsweise substantiell niedrigeren Abschnitt des Faltraumes unterhalb des Platzhalters 4 in begrenztem Umfang Gassackmaterial aufgenommen wird. Bei einer hinreichend geringen Höhe h' dieses Abschnittes des Faltraumes lässt sich aber, wie bereits erörtert, verhindern, dass Abschnitte der Gassackhülle 10 des ersten Gassackbereiches 11 in den zweiten Gassackbereich 12 hineingedrückt werden und umgekehrt.

Ausgehend von dem in den Figuren 4A und 4B gezeigten Zustand der Faltvorrichtung mit auf der Auflage 5 platziertem Gassack 1 werden zunächst die (durch den Platzhalter 4 voneinander getrennten) Faltelemente 71, 72 des ersten Paares (quer zur Erstreckungsrichtung des Platzhalters 4) aufeinander zu bewegt, wobei die beiden beidseits des Platzhalters 4 liegenden Gassackbereiche 11, 12 jeweils durch eines der Faltelemente 71 bzw. 72 (entlang dessen jeweiliger Verfahrrichtung y bzw. entlang der Querachse Q) komprimiert werden. Hierdurch erfolgt eine separate Faltenbildung in jenen beiden Gassackbereichen 11, 12.

In dem in Figur 4C gezeigten Zustand der Faltvorrichtung, in welchem die Faltelemente 71, 72 des ersten Paares ihre jeweilige Endposition erreicht haben, wird der Faltprozess anschließend durch Verfahren der Faltelemente 81, 82 des zweiten Paares zueinander entlang des Platzhalters 4 (und geführt durch diesen) fortgesetzt, entsprechend dem Übergang von Figur 4C zu Figur 4D. Jedes der beiden Faltelemente 81, 82 des zweiten Paares wirkt dabei jeweils (separat) auf beide Gassackbereiche 11, 12 ein, nämlich mit je einem Schenkel 86 auf den einen Gassackbereich 11 und mit dem anderen Schenkel 87 auf den zweiten Gassackbereich 12. Auch hierbei werden die beiden Gassackbereiche 11, 12 im Wesentlichen separat gefaltet, da durch den Platzhalter 4 vermieden wird, dass Hüllenmaterial des einen Gassackbereiches 11 in den anderen Gassackbereich 12 hineinverschoben wird und umgekehrt. Eine Verbindung zwischen den beiden Gassackbereichen 11, 12 besteht lediglich in dem Faltraumabschnitt reduzierter Falthöhe h' unterhalb des Platzhalters 4.

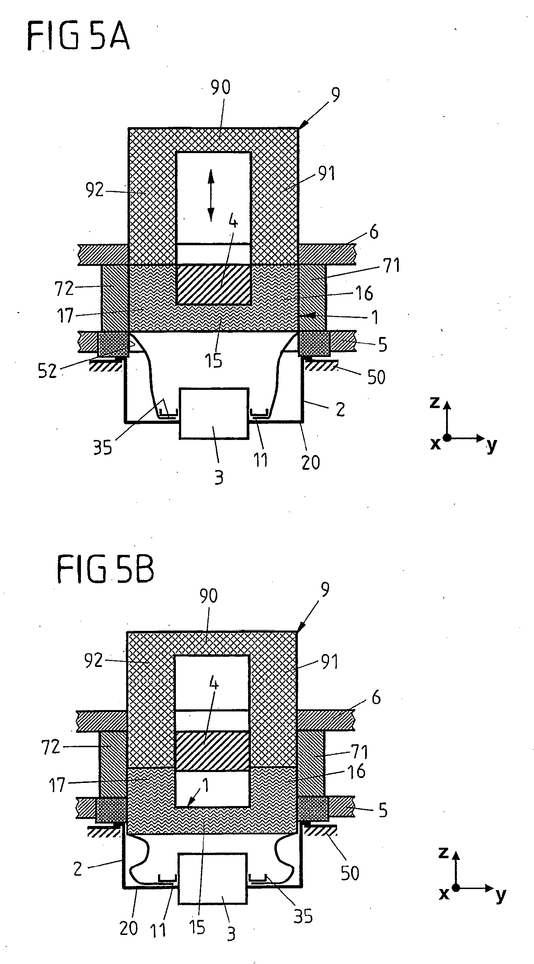

Nach Abschluss der Verfahrbewegung der Faltelemente 81, 82 des zweiten Paares, wie in Figur 4D sowie der zugehörigen Querschnittsdarstellung der Figur 5A dargestellt, liegt ein im Querschnitt im Wesentlichen U-förmiges Gassackpaket vor, welches oberhalb der Öffnung 52 der Auflage 5 angeordnet ist und dessen Basis 15 jene Öffnung 52 überdeckt. Die beiden Schenkel 16, 17 des Gassackpaketes stehen dabei von jener Basis 15 des Gassackpaketes in Richtung auf die Abdeckung 6 ab und durchmessen den Faltraum R im Wesentlichen entlang seiner gesamten Höhe. Die Breite der Schenkel 16, 17 senkrecht zur vertikalen Richtung z entspricht dem entlang der jeweiligen Raumrichtung (x oder y) neben dem Gasgenerator 3 in dem Modulgehäuse 2 zur Verfügung stehenden Raum.

Die Packdichte in den Schenkeln 16, 17 des Gassackpaketes ist dabei vorteilhaft größer als in dem Basisbereich 15 (Verbindungsbereich), welcher die beiden Schenkel 16, 17 miteinander verbindet (und sich unterhalb des Platzhalters 4 befindet).

Das mit dem anhand der Figuren 4A bis 4D beschriebenen Verfahren erzeugte und in Figur 5A dargestellte Gassackpaket bietet den Vorteil, dass die beiden separat gefalteten (beidseits des Platzhalters 4 angeordneten) Gassackbereiche 11, 12 schließlich zwei räumlich voneinander separierte, durch den Basisbereich 15 verbundene Schenkel 16, 17 in dem gefalteten Gassackpaket bilden. Dies ermöglicht eine derartige Anordnung des Gassackpaketes mit seinen Schenkeln 16, 17 in einem Kraftfahrzeug, das solche Gassackbereiche, die sich nach dem Aufblasen und Entfalten des Gassackes 1 in einer bestimmten Position bezüglich eines zu schützenden Fahrzeuginsassen befinden sollen, bereits im gefalteten und verstauten Zustand des Gassackes 1 als Bestandteil des einen oder anderen Schenkels 16, 17 des Gassackpaketes für eine gezielte Entfaltung in eine bestimmte Position bezüglich des Fahrzeuginsassen zur Verfügung stehen.

Mit anderen Worten ausgedrückt, können Gassackbereiche, die sich nach dem Entfalten des Gassackes 1 auf einer bestimmten Seite eines zu schützenden Fahrzeuginsassen befinden sollen, bereits im gefalteten Gassackpaket zuverlässig auf der entsprechenden Seite, nämlich als Teil des einen oder anderen Schenkels 16, 17, angeordnet werden.

Anhand der Figuren 5A bis 5D sei nun der Packvorgang erläutert; d. h., das Verstauen des zu einem Paket gefalteten Gassackes 1 im Modulgehäuse 2.

Hierzu wird ein Packstempel 9 verwendet, der, wie bereits anhand der Figuren 3A bis 3C beschrieben, senkrecht zur Auflage 5, also entlang der vertikalen Achse z, verschieblich an bzw. in der Abdeckung 6 gelagert ist. Im Ausführungsbeispiel der Figuren 5A bis 5D ist der Packstempel 9 im Querschnitt U-förmig ausgebildet, wobei die Schenkel 91, 92 des Packstempels 9 hier von der Basis 90 des Packstempels 9 in Richtung auf die Auflage 5 abstehen und damit - bei Vorhandensein eines gefalteten Gassackpaketes in der Faltvorrichtung - in Richtung auf das Gassackpaket.

Die Schenkel 91, 92 des Packstempels 9 sind vorliegend - entlang der Basis 90 - derart voneinander beabstandet und zudem - insbesondere hinsichtlich ihres Querschnittes - derart dimensioniert, dass sie die Schenkel 16, 17 des in der Faltvorrichtung erzeugten Gassackpaketes senkrecht zur vertikalen Achse z (also entlang der Auflage 5 bzw. der xy-Ebene) überdecken, wenn sich das gefaltete Gassackpaket bestimmungsgemäß über der Öffnung 52 der Auflage 5 und somit unterhalb des Packstempels 9 befindet.

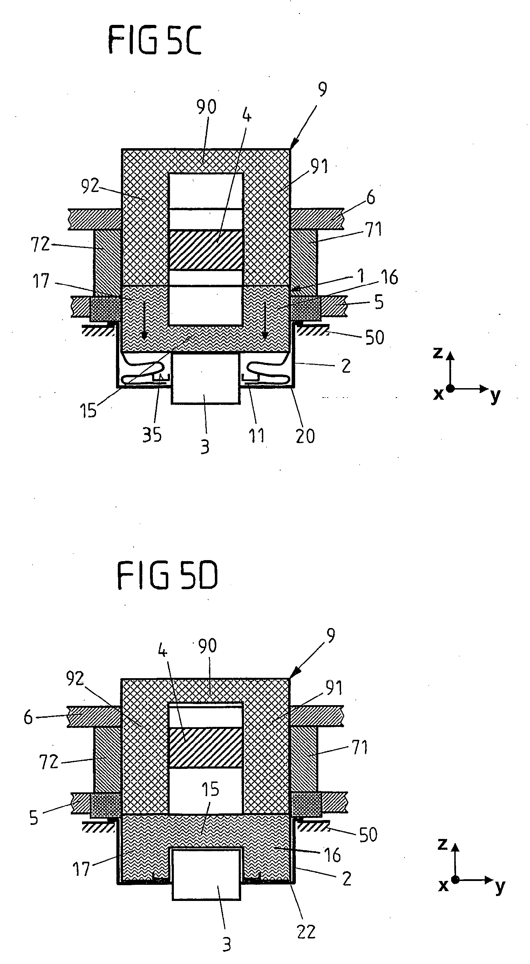

Beim Verfahren des Packstempels 9 in Richtung auf die Auflage 5, genauer in Richtung auf deren Öffnung 52 und das darunter angeordnete Modulgehäuse 2, wird das Gassackpaket in jenes Modulgehäuse 2 eingeführt (eingedrückt), wie anhand der in den Figuren 5B und 5C gezeigten Schritte erkennbar. Der Platzhalter 4 verbleibt dabei vorliegend in seiner Position innerhalb der Faltvorrichtung (also insbesondere auch zwischen den Schenkeln 16, 17 des gefalteten Gassackpaketes). Hierdurch wird verhindert, dass beim Verstauen des Gassackpaketes in dem Modulgehäuse 2 die beim Falten erreichte Unterteilung des Gassackpaketes in solche Bereiche, die dem ersten Schenkel 16 zugehören, und solche Bereiche, die dem zweiten Schenkel 17 zugehören, wieder aufgehoben werden könnte.

Um das Verfahren des Packstempels 9, wie in den Figuren 5B und 5C dargestellt, bei Anwesenheit des Platzhalters 4 zwischen den Schenkeln 16, 17 des gefalteten Gassackes 1 zu ermöglichen, ist der Abstand der Schenkel 91, 92 des Packstempels 9 so zu wählen, dass diese den Platzhalter 4 ebenfalls zwischen sich aufnehmen können, wie anhand Figur 5B und 5C erkennbar.

Bei dem Einführen des Gassackpaketes in das Modulgehäuse 2 wirkt der Packstempel 9 (über seine Schenkel 91, 92) zunächst fortdauernd auf die Schenkel 16, 17 des Gassackpaketes ein (und zwar vorliegend ausschließlich auf jene Schenkel 16, 17). Hierbei erreicht das Gassackpaket schließlich die ihm zugewandte Seite (Oberseite) des Gasgenerators 3 bzw. einer entsprechenden Attrappe. Vorliegend trifft das Gassackpaket mit seiner Basis 15 (welche als Verbindungsbereich die Schenkel 16, 17 verbindet) auf den Gasgenerator 3 bzw. dessen Oberseite auf. Das Gassackpaket stützt sich dann über seine Basis 15 (Verbindungsbereich) am Gasgenerator 3 bzw. dessen Oberseite ab.

Die beidseits des Gasgenerators 3 in das Modulgehäuse 2 eintauchenden Schenkel 16, 17 des Gassackpaketes können sodann (unter fortdauernder Einwirkung des Packstempels 9) noch weiter in das Modulgehäuse 2 hineinbewegt werden, und zwar sowohl am Verbindungsbereich 15 des Gassackpaketes vorbei als auch am Gasgenerator 3 vorbei, wie anhand des Übergangs von Figur 5C zu Figur 5D dargestellt. D. h., die Schenkel 16, 17 des Gassackpaketes werden bei diesem Vorgang bezüglich des Verbindungsbereiches 15 derart verlagert, dass sie schließlich von dem Verbindungsbereich 15 in Richtung auf den Boden 20 des Modulgehäuses 2 abstehen, wie in Figur 5D gezeigt (und nicht mehr in Richtung auf die Abdeckung 6, wie ursprünglich, vergleiche Figuren 5A bis 5C).

Hieraus resultiert gemäß Figur 5D ein im Modulgehäuse 2 verstautes Gassackpaket, welches den zur Verfügung stehenden Innenraum des Modulgehäuses 2 gezielt (vollständig) ausnutzt. Insbesondere ist es nicht erforderlich, beim Einbringen des Gassackpaketes in das Modulgehäuse 2 ersteres im Bereich oberhalb des Gasgenerators 3 stark zusammenzupressen, wie etwa im Fall der Figuren 3A bis 3C. Denn durch die im Querschnitt U-förmige Ausgestaltung des Gassackpaketes stellt dieses mit seiner Basis 15 bereits einen Bereich zur Verfügung, der in den im Modulgehäuse 2 oberhalb des Gasgenerators 3 zur Verfügung stehenden Raum passt.

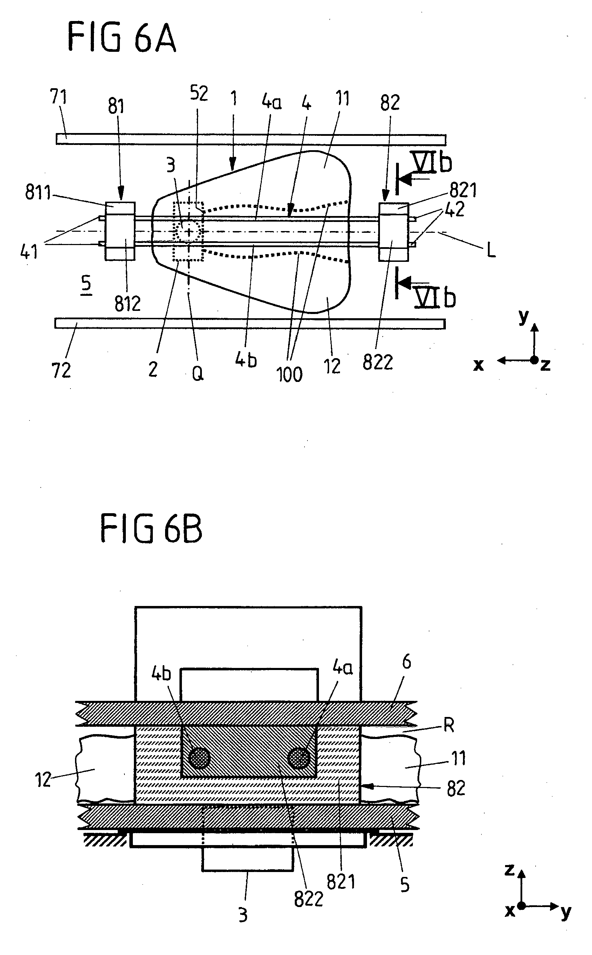

In den Figuren 6A und 6B ist in einer Draufsicht sowie in einem ausschnittsweisen Querschnitt eine Abwandlung der in den Figuren 4A und 4B gezeigten Faltvorrichtung dargestellt, mittels der ebenfalls das anhand der Figuren 4A - 4D erläuterte Faltverfahren unter Verwendung eines Platzhalters 4 ausgeführt werden kann.

Nachfolgend werden insbesondere die Unterschiede zwischen der in den Figuren 6A und 6B dargestellten Faltanordnung einerseits sowie der in den Figuren 4A und 4B gezeigten Faltanordnung andererseits erläutert werden, während für übereinstimmende Bauelemente und Baugruppen auf die Beschreibung der Figuren 4A und 4B Bezug genommen wird. Hierzu sind in den Figuren 4A und 4B einerseits sowie in den Figuren 6A und 6B andererseits übereinstimmende Bauelemente bzw. Baugruppen jeweils mit den gleichen Bezugszeichen versehen.

Ein Unterschied zwischen der Anordnung aus den Figuren 6A und 6B zur Anordnung aus den Figuren 4A und 4B besteht darin, dass der Platzhalter 4 gemäß den Figuren 6A und 6B mehrteilig, im Ausführungsbeispiel konkret zweiteilig ausgeführt ist.

In Übereinstimmung mit dem Ausführungsbeispiel der Figuren 4A und 4B erstreckt sich dabei auch der in den Figuren 6A und 6B gezeigte Platzhalter 4 (durchgängig) zwischen einem ersten Ende 41 und einem zweiten Ende 42, und zwar entlang der gesamten Ausdehnung des Gassackes 1. D. h., die beiden Enden des Platzhalters 4 ragen jeweils über einen (von zwei entlang der Erstreckungsrichtung des Platzhalters 4 einander gegenüberliegenden) Randabschnitt des Gassackes 1 hinaus.

Der Platzhalter 4 umfasst hierbei im Ausführungsbeispiel der Figuren 6A und 6B zwei längserstreckte stangenförmige Elemente 4a, 4b, die beispielsweise als Zylinder (mit kreisförmigem Querschnitt) ausgeführt sein können und die quer zu Ihrer Erstreckungsrichtung x, also in γ-Richtung, voneinander beabstandet sind. Um ein einwandfreies Packen des zu faltenden Gassackpaketes zu gewährleisten, ist der besagte Abstand zwischen den beiden stangenförmigen Elementen 4a, 4b des Platzhalters 4 vorteilhaft zumindest genauso groß bzw. größer als die Erstreckung des Gasgenerators 3 bzw. des entsprechenden Platzhalters in jener Richtung y.

Die beiden stangenförmigen Elemente 4a, 4b des Platzhalters 4 sind dabei im Bereich ihrer jeweiligen Enden 41, 42 durch geeignete (nicht dargestellte) Befestigungsmittel z. B. an der Abdeckung 6 fixiert. D. h., bei einem Platzieren der Abdeckung 6 oberhalb der Auflage 5 zur Bildung des Faltraumes R wird automatisch der Platzhalter 4 mit seinen längserstreckten stangenartigen Elementen 4a, 4b im Faltraum R positioniert.

Wie beim Ausführungsbeispiel der Figuren 4A und 4B sind auch bei der Faltvorrichtung aus den Figuren 6A und 6B zwei (einander gegenüberliegende) entlang des Platzhalters 4 bzw. entlang der stangenförmigen Elemente 4a, 4b verfahrbare Faltelemente 81, 82 vorgesehen, welche hier wiederum ein zweites Paar an Faltelementen bilden.

Im Unterschied zu der Anordnung aus den Figuren 4A und 4B sind dabei vorliegend die beiden entlang des Platzhalters 4 verschiebbaren Faltelemente 81, 82 jeweils zweiteilig ausgeführt. Sie umfassen jeweils ein auf dem Platzhalter 4 bzw. den stangenartigen Elementen 4a, 4b längsverschieblich gelagertes Segment 812 bzw. 822 sowie ein hiermit verbundenes Faltelementsegment 811 bzw. 821.

Die verfahrbar auf dem Platzhalter gelagerten Segmente 812 und 822 sind dabei zur Bildung jeweils eines Faltelementes 81, 82 derart mit dem jeweils zugeordneten Faltelementsegment 811 bzw. 821 verbunden, dass diese gemeinsam entlang des Platzhalters 4 verfahren werden können, wobei die beiden stangenförmigen Elemente 4a, 4b als Führungen dienen. Mit anderen Worten ausgedrückt, sind auf den stangenförmigen Elementen 4a, 4b unmittelbar die Segmente 812, 822 geführt sowie indirekt die hiermit verbundenen Faltelementsegmente 811, 821.

Konkret umgibt das jeweilige Faltelementsegment 811, 821 der Faltelemente 81, 82 den Platzhalter 4 bzw. dessen stangenförmige Elemente 4a, 4b im Querschnitt U-förmig; und der zwischen den Schenkeln der Faltelementsegmente 811, 821 liegende Raum wird durch jeweils eines der Segmente 812, 822 ausgefüllt, welche die stangenförmigen Elemente 4a, 4b längsverschieblich umgreifen.

Das Ineingriffbringen eines jeweiligen Segmentes 812, 822 mit dem zugeordneten Faltelementsegment 811, 821 erfolgt beim Positionieren bzw. Absenken der Abdeckung 6 über der Auflage 5, wobei die längsverschieblich an dem Platzhalter 4 bzw. den stangenförmigen Elementen 4a, 4b gelagerten Segmente 812, 822 jeweils mit einem der Faltelementsegmente 811, 821 in Eingriff treten, welch letztere hierzu auf der Auflage 5 geeignet angeordnet wurden.

Mit der anhand der Figuren 6A und 6B beschriebenen (zweiteiligen) Ausführung des Platzhalters 4 sollen insbesondere Beschädigungen des Gassackes 1 beim Falten (mittels der Faltelemente 71, 72; 81, 82) vermieden werden. Konstruktionsbedingt lassen sich bei der in den Figuren 6A und 6B gezeigten Vorrichtung die Toleranzen zwischen den relativ zueinander bewegten Vorrichtungskomponenten minimieren, was das Risiko eines Einklemmens von Gewebematerial des Gassackes weitgehend eliminiert.

Insbesondere in Figur 6B ist zudem noch eine Besonderheit bei der Anordnung eines Gasgenerators 3 bzw. einer den Gasgenerator repräsentierenden Attrappe bezüglich der Faltvorrichtung erkennbar, die auch beim Ausführungsbeispiel der Figuren 4A und 4B anwendbar ist. Hiernach schließt der Gasgenerator 3 bzw. die den Gasgenerator repräsentierende Attrappe an ihrer dem Faltraum R zugewandten Oberseite annähernd bündig mit der unteren Begrenzung des Faltraumes R, d. h. mit der Auflage 5, auf der der Gassack 1 angeordnet ist, ab. Dadurch verbleibt der Basisbereich 15 des gefalteten Gassackes, vergleiche Figur 5A, beim anschließenden Verstauen des Gassackes in einem Modulgehäuse 2, wie in den Figuren 5A und 5D prinzipiell dargestellt, im Wesentlichen in seiner ursprünglichen, nach dem Falten eingenommenen Position (und wird - im Gegensatz zum Vorgehen bei den Figuren 5B und 5C - durch den Packstempel 9 nicht nach unten verschoben).

Lediglich die durch den Platzhalter 4 bzw. die stangenartigen Elemente 4a, 4b voneinander separierten Schenkel 16, 17 des gefalteten Gassackes werden bei der Beaufschlagung des gefalteten Gassackpaketes durch den Packstempel 9 bewegt, bis sie ihre Endlage im Modulgehäuse 2 (bzw. einer das Modulgehäuse repräsentierenden Aufnahme) erreicht haben, wie auch in den Figuren 5B - 5D dargestellt.

## Patentansprüche

1. Verfahren zum Falten eines Gassackes für ein Airbagmodul, bei dem
a) der Gassack (1) auf einer Auflage (5) angeordnet wird und
b) der Gassack (1) zwischen der Auflage (5) als einer ersten Begrenzung und einer von der Auflage (5) beabstandeten Abdeckung (6) als einer zweiten Begrenzung eines Faltraumes (R) mittels Faltelementen (71, 72; 81, 82) zusammengefaltet wird, indem die Faltelemente (71, 72; 81, 82) zwischen der Auflage (5) und der Abdeckung (6) vom Rand des auf der Auflage (5) angeordneten Gassackes (1) in Richtung auf dessen Inneres verfahren werden,
wobei in dem Faltraum (R) zwischen der Auflage (5) und der Abdeckung (6) ein Platzhalter (4) vorgesehen ist, so dass beim Falten des Gassackes (1) zumindest zwei durch den Platzhalter (4) separierte, gefaltete Gassackbereiche (16, 17) gebildet werden,
**dadurch gekennzeichnet,**
**dass** der Platzhalter (4) von mindestens einer der Begrenzungen in Form der Abdeckung (5) und der Auflage (6) derart beabstandet ist, dass zwischen dem Platzhalter (4) und der beabstandeten Begrenzung (5, 6) ein Teilabschnitt des Faltraumes (R) definiert wird, in welchem beim Falten des Gassackes (1) ein weiterer gefalteter Gassackbereich (15) gebildet wird, über den die beiden separierten Gassackbereiche (16, 17) miteinander verbunden sind, und dass der Gassack (1) und der zwischen zwei Enden (41, 42) erstreckte Platzhalter (4) vor dem Falten des Gassackes (1) derart zueinander angeordnet werden, dass sich der Platzhalter (4) mit seinen beiden Enden (41, 42) jeweils über den Rand des Gassackes (1) hinaus erstreckt, wenn der Gassack (1) vor dem Falten bestimmungsgemäß auf der Auflage (5) angeordnet ist.

2. Verfahren nach Anspruch 1, **dadurch gekennzeichnet, dass** der Platzhalter (4) derart im Faltraum zwischen der Auflage (5) und der Abdeckung (6) angeordnet wird, dass er von einer dieser beiden Begrenzungen (5, 6) in Richtung auf die andere Begrenzung (6, 5) absteht.

3. Verfahren nach Anspruch 1 oder 2, **dadurch gekennzeichnet, dass** der Platzhalter (4) vor dem Falten des Gassackes (1) über der der Auflage (5) abgewandten Seite des bestimmungsgemäß auf der Auflage (5) angeordneten Gassackes (1) angeordnet wird und sich vor jener Seite des Gassackes (1) entlang der Auflage (5) erstreckt.

4. Verfahren nach einem der vorhergehenden Ansprüche, **dadurch gekennzeichnet, dass** die Auflage (5) und die Abdeckung (6) ein Höhenprofil definieren, das die Höhe der beiden separierten Gassackbereiche (16, 17) senkrecht zur Auflage (15) im gefalteten Zustand des Gassackes (1) festlegt, und dass die Höhe des weiteren Gassackbereiches (15) im gefalteten Zustand des Gassackes (1) kleiner ist als die Höhe jener beiden Gassackbereiche (16, 17).

5. Verfahren nach einem der vorhergehenden Ansprüche, **dadurch gekennzeichnet, dass** mindestens eines der Faltelemente (81, 82) beim Falten des Gassackes (1) entlang des Platzhalters (4) verfahren wird und dass das mindestens eine Faltelement (81, 82) beim Falten des Gassackes (1) durch den Platzhalter (4) geführt wird.

6. Verfahren nach Anspruch 5, **dadurch gekennzeichnet, dass** das mindestens eine Faltelement (81, 82) beim Falten des Gassackes (1) entlang des Platzhalters (4) verschieblich mit dem Platzhalter (4) in Eingriff steht.

7. Verfahren nach einem der vorhergehenden Ansprüche, **dadurch gekennzeichnet, dass** die Faltelemente (71, 72; 81, 82) einander jeweils paarweise gegenüberliegend angeordnet sind und beim Falten des Gassackes (1) aufeinander zu bewegt werden, wobei zwei Faltelemente (81, 82) beim Falten des Gassackes (1) entlang des Platzhalters (4) aufeinander zu bewegt werden und dass zwei andere Faltelemente (71, 72) beim Falten des Gassackes (1) beidseits des Platzhalters (4) aufeinander zu bewegt werden, so dass letztere während des gesamten Faltvorganges durch den Platzhalter (4) voneinander getrennt sind.

8. Verfahren nach Anspruch 7, **dadurch gekennzeichnet, dass** beim Falten des Gassackes (1) zunächst die durch den Platzhalter (4) voneinander getrennten Faltelemente (71, 72) aufeinander zu bewegt werden und hierdurch der Gassack (1) zusammengedrückt wird und dass anschließend die beiden entlang des Platzhalters (4) geführten Faltelemente (81, 82) aufeinander zu bewegt werden und hierdurch der Gassack (1) in seine endgültige Form zusammengefaltet wird.

9. Verfahren nach einem der vorhergehenden Ansprüche, **dadurch gekennzeichnet, dass** der Gassack (1) mittels der Faltelemente (71, 72; 81, 82) zu einem im Querschnitt U-förmigen Gassackpaket zusammengefaltet wird, wobei sich der Platzhalter (4) zwischen den beiden Schenkeln (16, 17) des Gassackpaketes erstreckt.

10. Verfahren nach einem der vorhergehenden Ansprüche, **dadurch gekennzeichnet, dass** die Auflage (5) eine Öffnung (52) aufweist, durch die hindurch der zu einem Gassackpaket gefaltete Gassack (1) in ein hinter der Öffnung (52) angeordnetes Modulgehäuse (2) eingeführt wird, und dass in das Modulgehäuse (2) ein Gasgenerator (3) oder eine Attrappe des Gasgenerators (3) zumindest mit einem Abschnitt hineinragt, wobei der zu einem Gassackpaket gefaltete Gassack (1) derart durch die Öffnung (52) hindurch in das Modulgehäuse (2) eingeführt wird, dass der weitere Gassackbereich (15) oberhalb einer der Öffnung (52) zugewandten Seite des Gasgenerators (3) oder der Attrappe liegt.

11. Verfahren nach Anspruch 10, **dadurch gekennzeichnet, dass** der gefaltete Gassack (1) mittels eines quer zur Auflage (5) verfahrbaren Packstempels (9) durch die Öffnung (52) in das Modulgehäuse (2) gedrückt wird und dass der Packstempel (9) ausschließlich auf die Schenkel (16, 17) des zu einem im Querschnitt U-förmigen Paket gefalteten Gassackes (1) einwirkt.

12. Vorrichtung zum Falten eines Gassackes für ein Airbagmodul, mit
- einer Auflage (5), auf der ein zu faltender Gassack (1) anzuordnen ist,
- einer von der Auflage (5) beabstandeten Abdeckung (6), die den Gassack (1) überdeckt, wenn dieser bestimmungsgemäß auf der Auflage (5) angeordnet ist,
- Faltelementen (71, 72; 81, 82), mittels derer der Gassack (1) zwischen der Auflage (5) als einer ersten Begrenzung und der Abdeckung (6) als einer zweiten Begrenzung eines Faltraums (R) zusammenfaltbar ist, indem die Faltelemente (71, 72; 81, 82) zwischen der Auflage (5) und der Abdeckung (6) verfahren werden, und
- einem in dem Faltraum (R) zwischen der Auflage (5) und der Abdeckung (6) derart positionierten Platzhalter (4), dass beim Falten des Gassackes (1) zumindest zwei durch den Platzhalter (4) separierte, gefaltete Gassackbereiche (16, 17) gebildet werden,
**dadurch gekennzeichnet,**
**dass** der Platzhalter (4) von mindestens einer der Begrenzungen in Form der Abdeckung (5) und der Auflage (6) derart beabstandet ist, dass zwischen dem Platzhalter (4) und der hiervon beabstandeten Begrenzung (5, 6) ein Teilabschnitt des Faltraumes (R) definiert wird, in welchem beim Falten des Gassackes (1) ein weiterer gefalteter Gassackbereich (15) gebildet wird, über den die beiden separierten Gassackbereiche (16, 17) miteinander verbunden sind, und dass sich der Platzhalter (4) zwischen zwei Enden (41, 42) erstreckt, die jeweils über den Rand des Gassackes (1) hinaus stehen, wenn der Gassack (1) vor dem Falten bestimmungsgemäß auf der Auflage (5) angeordnet ist.

13. Vorrichtung nach Anspruch 12, **dadurch gekennzeichnet, dass** mindestens ein Faltelement (81, 82) verschieblich mit dem Platzhalter (4) in Eingriff steht, so dass es beim Falten des Gassackes (1) entlang des Platzhalters (4) geführt wird.

14. Vorrichtung nach Anspruch 12 oder 13, **dadurch gekennzeichnet, dass** die Faltelemente (71, 72; 81, 82) einander jeweils paarweise gegenüberliegend angeordnet sind und beim Falten des Gassackes (1) aufeinander zu bewegbar sind, wobei ein Paar von Faltelementen (71, 72) beidseits des Platzhalters (4) angeordnet ist, so dass die beiden Faltelemente (71, 72) durch den Platzhalter (4) voneinander getrennt sind.

15. Vorrichtung nach einem der Ansprüche 12 bis 14, **dadurch gekennzeichnet, dass** die Auflage (5) eine Öffnung (52) aufweist, durch die hindurch der gefaltete Gassack (1) in ein hinter der Öffnung (52) anordenbares Modulgehäuse (2) einführbar ist, und dass der Öffnung (52) ein Packstempel (9) zugeordnet ist, mittels dem der gefaltete Gassack (1) durch die Öffnung (52) hindurch in das Modulgehäuse (2) drückbar ist.

16. Vorrichtung nach Anspruch 15, **dadurch gekennzeichnet, dass** der Packstempel (9) zwei voneinander beabstandete Schenkel (91, 92) aufweist, die zum Einbringen des Gassackes (1) in das Modulgehäuse (2) auf je einen Schenkel (16, 17) eines zu einem im Querschnitt U-förmigen Paket gefalteten Gassacks (1) einwirken können.

## Claims

1. Method for folding an airbag for an airbag module, in which
a) the airbag (1) is arranged on a support (5), and
b) the airbag (1) is folded up by means of folding elements (71, 72; 81, 82) between the support (5) as a first boundary and a covering (6), which is spaced apart from the support (5), as a second boundary of a folding space (R) by the folding elements (71, 72; 81, 82) between the support (5) and the covering (6) being moved from the edge of the airbag (1), which is arranged on the support, in the direction of the interior of said airbag,
wherein a spacer (4) is provided in the folding space (R) between the support (5) and the covering (6) such that, during the folding of the airbag (1), at least two folded airbag regions (16, 17) separated by the spacer (4) are formed,
**characterized**
**in that** the spacer (4) is spaced apart from at least one of the boundaries in the form of the covering (5) and the support (6) in such a manner that a subsection of the folding space (R) is defined between the spacer (4) and the spaced-apart boundary (5, 6), in which subsection, during the folding of the airbag (1), a further folded airbag region (15) is formed, via which the two separated airbag regions (16, 17) are connected to each other, and in that, before the folding of the airbag (1), the airbag (1) and the spacer (4), which is extended between two ends (41, 42), are arranged with respect to each other in such a manner that the space (4) with its two ends (41, 42) each extends beyond the edge of the airbag (1) when the airbag (1) is arranged as directed on the support (5) before the folding.

2. Method according to Claim 1, **characterized in that** the spacer (4) is arranged in the folding space between the support (5) and the covering (6) in such a manner that said spacer protrudes from one of said two boundaries (5, 6) in the direction of the other boundary (6, 5).

3. Method according to Claim 1 or 2, **characterized in that**, before the folding of the airbag (1), the spacer (4) is arranged over that side of the airbag (1), arranged as directed on the support (5), that faces away from the support (5) and extends along the support (5) in front of that side of the airbag (1).

4. Method according to one of the preceding claims, **characterized in that** the support (5) and the covering (6) define a height profile which determines the height of the two separated airbag regions (16, 17) perpendicularly to the support (15) in the folded state of the airbag (1), and **in that**, in the folded state of the airbag (1), the height of the further airbag region (15) is smaller than the height of said two airbag regions (16, 17).

5. Method according to one of the preceding claims, **characterized in that** at least one of the folding elements (81, 82) is moved along the spacer (4) during the folding of the airbag (1), and **in that** the at least one folding element (81, 82) is guided by the spacer (4) during the folding of the airbag (1).

6. Method according to Claim 5, **characterized in that** the at least one folding element (81, 82) is in engagement with the spacer (4) so as to be displaceable along the spacer (4) during the folding of the airbag (1).

7. Method according to one of the preceding claims, **characterized in that** the folding elements (71, 72; 81, 82) are arranged opposite each other in each case in pairs and are moved towards each other during the folding of the airbag (1), wherein, during the folding of the airbag (1), two folding elements (81, 82) are moved towards each other along the spacer (4), and **in that**, during the folding of the airbag (1), two other folding elements (71, 72) are moved towards each other on both sides of the spacer (4), so that said two other folding elements are separated from each other by the spacer (4) during the entire folding operation.

8. Method according to Claim 7, **characterized in that**, during the folding of the airbag (1), first of all the folding elements (71, 72) which are separated from each other by the spacer (4) are moved towards each other and the airbag (1) is thereby compressed, and **in that** the two folding elements (81, 82) which are guided along the spacer (4) are subsequently moved towards each other and the airbag (1) is thereby folded up into the final form thereof.

9. Method according to one of the preceding claims, **characterized in that** the airbag (1) is folded up by means of the folding elements (71, 72; 81, 82) to form a cross-sectionally U-shaped airbag package, wherein the spacer (4) extends between the two limbs (16, 17) of the airbag package.

10. Method according to one of the preceding claims, **characterized in that** the support (5) has an opening (52) through which the airbag (1) folded to form an airbag package is introduced into a module housing (2) arranged behind the opening (52), and **in that** a gas generator (3) or a dummy of the gas generator (3) projects at least with one section into the module housing (2), wherein the airbag (1) folded to form an airbag package is introduced through the opening (52) into the module housing (2) in such a manner that the further airbag region (15) lies above a side of the gas generator (3) or of the dummy, which side faces the opening (52).

11. Method according to Claim 10, **characterized in that** the folded airbag (1) is pressed through the opening (52) into the module housing (2) by means of a packing ram (9) which is movable transversely with respect to the support (5), and **in that** the packing ram (9) acts exclusively on the limbs (16, 17) of the airbag (1) folded to form a cross-sectionally U-shaped package.

12. Device for folding an airbag for an airbag module, with
- a support (5) on which an airbag (1) which is to be folded is to be arranged,
- a covering (6) which is spaced apart from the support (5) and covers the airbag (1) when the latter is arranged as directed on the support (5),
- folding elements (71, 72; 81, 82) by means of which the airbag (1) can be folded up between the support (5) as a first boundary and the covering (6) as a second boundary of a folding space (R) by the folding elements (71, 72; 81, 82) being moved between the support (5) and the covering (6), and
- a spacer (4) positioned in the folding space (R) between the support (5) and the covering (6) in such a manner that, during the folding of the airbag (1), at least two folded airbag regions (16, 17) which are separated by the spacer (4) are formed,
**characterized**
**in that** the spacer (4) is spaced apart from at least one of the boundaries in the form of the covering (5) and the support (6) in such a manner that a subsection of the folding space (R) is defined between the spacer (4) and the boundary (5, 6) spaced apart therefrom, in which subsection, during the folding of the airbag (1), a further folded airbag region (15) is formed, via which the two separated airbag regions (16, 17) are connected to each other, and in that the spacer (4) extends between two ends (41, 42) which each protrude beyond the edge of the airbag (1) when the airbag (1) is arranged as directed on the support (5) before the folding.

13. Device according to Claim 12, **characterized in that** at least one folding element (81, 82) is in engagement with the spacer (4) in a displaceable manner such that said folding element is guided along the spacer (4) during the folding of the airbag (1).

14. Device according to Claim 12 or 13, **characterized in that** the folding elements (71, 72; 81, 82) are arranged opposite each other in each case in pairs and are movable towards each other during the folding of the airbag (1), wherein one pair of folding elements (71, 72) is arranged on both sides of the spacer (4) such that the two folding elements (71, 72) are separated from each other by the spacer (4).

15. Device according to one of Claims 12 to 14, **characterized in that** the support (5) has an opening (52) through which the folded airbag (1) is introducible into a module housing (2) arrangeable behind the opening (52), and **in that** the opening (52) is assigned a packing ram (9) by means of which the folded airbag (1) is pressable through the opening (52) into the module housing (2).

16. Device according to Claim 15, **characterized in that** the packing ram (9) has two spaced-apart limbs (91, 92) which, for placing the airbag (1) into the module housing (2), can each act on a limb (16, 17) of an airbag (1) folded to form a cross-sectionally U-shaped package.

## Revendications

1. Procédé pour le pliage d'un airbag pour un module d'airbag, dans lequel
a) l'airbag (1) est disposé sur un support (5) et
b) l'airbag (1) est plié entre le support (5) constituant une première limitation et un recouvrement (6) espacé du support (5) constituant une deuxième limitation d'un espace de pliage (R) au moyen d'éléments de pliage (71, 72 ; 81, 82), les éléments de pliage (71, 72 ; 81, 82) étant déplacés entre le support (5) et le recouvrement (6) par le bord de l'airbag (1) disposé sur le support (5) dans la direction de l'intérieur de l'airbag,
un élément d'espacement (4) étant prévu dans l'espace de pliage (R) entre le support (5) et le recouvrement (6), de telle sorte que lors du pliage de l'airbag (1) au moins deux régions d'airbag pliées (16, 17) séparées par l'élément d'espacement (4) soient formées,
**caractérisé en ce que**
l'élément d'espacement (4) est espacé d'au moins l'une des limitations constituées par le recouvrement (5) et le support (6) de telle sorte qu'entre l'élément d'espacement (4) et la limitation espacée (5, 6) soit définie une portion partielle de l'espace de pliage (R) dans laquelle, lors du pliage de l'airbag (1), est formée une région d'airbag pliée supplémentaire (15), par le biais de laquelle les deux régions d'airbag séparées (16, 17) sont connectées l'une à l'autre, et **en ce que** l'airbag (1) et l'élément d'espacement (4) s'étendant entre deux extrémités (41, 42) sont disposés avant le pliage de l'airbag (1) l'un par rapport à l'autre de telle sorte que l'élément d'espacement (4) s'étende avec ses deux extrémités (41, 42) à chaque fois au-delà du bord de l'airbag (1) lorsque l'airbag (1) est disposé avant le pliage de manière correcte sur le support (5).

2. Procédé selon la revendication 1, **caractérisé en ce que** l'élément d'espacement (4) est disposé dans l'espace de pliage entre le support (5) et le recouvrement (6) de telle sorte qu'il fasse saillie depuis l'une de ces deux limitations (5, 6) dans la direction de l'autre limitation (6, 5).

3. Procédé selon la revendication 1 ou 2, **caractérisé en ce que** l'élément d'espacement (4), avant le pliage de l'airbag (1), est disposé au-dessus du côté, opposé au support (5), de l'airbag (1) disposé de manière correcte sur le support (5), et s'étend le long du support (5) devant ce côté respectif de l'airbag (1).

4. Procédé selon l'une quelconque des revendications précédentes, **caractérisé en ce que** le support (5) et le recouvrement (6) définissent un profilé en hauteur, lequel définit la hauteur des deux régions d'airbag séparées (16, 17) perpendiculairement au support (15) dans l'état plié de l'airbag (1), et **en ce que** la hauteur de la région d'airbag supplémentaire (15) dans l'état plié de l'airbag (1) est inférieure à la hauteur de ces deux régions d'airbag (16, 17).

5. Procédé selon l'une quelconque des revendications précédentes, **caractérisé en ce qu'**au moins l'un des éléments de pliage (81, 82), lors du pliage de l'airbag (1), est déplacé le long de l'élément d'espacement (4) et **en ce que** l'au moins un élément de pliage (81, 82), lors du pliage de l'airbag (1), est guidé par l'élément d'espacement (4).

6. Procédé selon la revendication 5, **caractérisé en ce que** l'au moins un élément de pliage (81, 82), lors du pliage de l'airbag (1), est en prise de manière déplaçable le long de l'élément d'espacement (4) avec l'élément d'espacement (4).

7. Procédé selon l'une quelconque des revendications précédentes, **caractérisé en ce que** les éléments de pliage (71, 72 ; 81, 82) sont disposés en regard les uns des autres à chaque fois par paire et, lors du pliage de l'airbag (1), sont déplacés les uns vers les autres, deux éléments de pliage (81, 82), lors du pliage de l'airbag (1), étant déplacés l'un vers l'autre le long de l'élément d'espacement (4), et **en ce que** deux autres éléments de pliage (71, 72), lors du pliage de l'airbag (1), sont déplacés l'un vers l'autre de chaque côté de l'élément d'espacement (4), de telle sorte que ces derniers soient séparés l'un de l'autre par l'élément d'espacement (4) pendant toute l'opération de pliage.

8. Procédé selon la revendication 7, **caractérisé en ce que** lors du pliage de l'airbag (1), tout d'abord, les éléments de pliage (71, 72) séparés l'un de l'autre par l'élément d'espacement (4) sont déplacés l'un vers l'autre et de ce fait l'airbag (1) est comprimé et **en ce qu'**ensuite les deux éléments de pliage (81, 82) guidés le long de l'élément d'espacement (4) sont déplacés l'un vers l'autre et de ce fait l'airbag (1) est plié dans sa forme définitive.

9. Procédé selon l'une quelconque des revendications précédentes, **caractérisé en ce que** l'airbag (1) est plié au moyen des éléments de pliage (71, 72 ; 81, 82) pour former un paquet d'airbag de section transversale en forme de U, l'élément d'espacement (4) s'étendant entre les deux branches (16, 17) du paquet d'airbag.

10. Procédé selon l'une quelconque des revendications précédentes, **caractérisé en ce que** le support (5) présente une ouverture (52) à travers laquelle l'airbag (1) plié en un paquet d'airbag est introduit dans un boîtier modulaire (2) disposé derrière l'ouverture (52), et **en ce qu'**un générateur de gaz (3) ou un générateur de gaz (3) factice pénètre avec au moins une portion dans le boîtier modulaire (2), l'airbag (1) plié en un paquet d'airbag étant introduit dans le boîtier modulaire (2) à travers l'ouverture (52) de telle sorte que la région d'airbag supplémentaire (15) se situe au-dessus d'un côté du générateur de gaz (3) ou du générateur de gaz factice tourné vers l'ouverture (52).

11. Procédé selon la revendication 10, **caractérisé en ce que** l'airbag plié (1) est pressé dans le boîtier modulaire (2) à travers l'ouverture (52) au moyen d'un poinçon de compactage (9) déplaçable transversalement au support (5) et **en ce que** le poinçon de compactage (9) agit exclusivement sur les branches (16, 17) de l'airbag (1) plié en un paquet de section transversale en forme de U.

12. Dispositif pour le pliage d'un airbag pour un module d'airbag, comprenant
- un support (5) sur lequel doit être disposé un airbag (21) devant être plié,
- un recouvrement (6) espacé du support (5), lequel recouvrement recouvre l'airbag (1) lorsque celui-ci est disposé de manière correcte sur le support (5),
- des éléments de pliage (71, 72 ; 81, 82), au moyen desquels l'airbag (1) peut être plié entre le support (5) constituant une première limitation et le recouvrement (6) constituant une deuxième limitation d'un espace de pliage (R), les éléments de pliage (71, 72 ; 81, 82) étant déplacés entre le support (5) et le recouvrement (6), et
- un élément d'espacement (4) positionné dans l'espace de pliage (R) entre le support (5) et le recouvrement (6) de telle sorte que lors du pliage de l'airbag (1) au moins deux régions d'airbag pliées (16, 17) séparées par l'élément d'espacement (4), soient formées,
**caractérisé en ce que**
l'élément d'espacement (4) est espacé d'au moins l'une des limitations constituées par le recouvrement (5) et le support (6) de telle sorte qu'entre l'élément d'espacement (4) et la limitation (5, 6) espacée de celui-ci, une portion partielle de l'espace de pliage (R) soit définie, dans laquelle, lors du pliage de l'airbag (1), est formée une région d'airbag pliée supplémentaire (15), par le biais de laquelle les deux régions d'airbag séparées (16, 17) sont connectées l'une à l'autre, et **en ce que** l'élément d'espacement (4) s'étend entre deux extrémités (41, 42) qui font saillie chacune au-delà du bord de l'airbag (1) lorsque l'airbag (1) est disposé avant le pliage de manière correcte sur le support (5).

13. Dispositif selon la revendication 12, **caractérisé en ce qu'**au moins un élément de pliage (81, 82) est en prise de manière déplaçable avec l'élément d'espacement (4), de telle sorte qu'il soit guidé le long de l'élément d'espacement (4) lors du pliage de l'airbag (1).

14. Dispositif selon la revendication 12 ou 13, **caractérisé en ce que** les éléments de pliage (71, 72 ; 81, 82) sont disposés en regard les uns des autres à chaque fois par paire et, lors du pliage de l'airbag (1), peuvent être déplacés les uns vers les autres, une paire d'éléments de pliage (71, 72) étant disposée de chaque côté de l'élément d'espacement (4), de telle sorte que les deux éléments de pliage (71, 72) soient séparés l'un de l'autre par l'élément d'espacement (4).

15. Dispositif selon l'une quelconque des revendications 12 à 14, **caractérisé en ce que** le support (5) présente une ouverture (52), à travers laquelle l'airbag plié (1) peut être introduit dans un boîtier modulaire (2) pouvant être disposé derrière l'ouverture (52), et **en ce que** l'ouverture (52) est associée à un poinçon de compactage (9) au moyen duquel l'airbag plié (1) peut être pressé à travers l'ouverture (52) dans le boîtier modulaire (2).

16. Dispositif selon la revendication 15, **caractérisé en ce que** le poinçon de compactage (9) présente deux branches (91, 92) espacées l'une de l'autre, lesquelles chaque fois peuvent agir sur chaque branche (16, 17) d'un airbag (1) plié en un paquet de section transversale en forme de U, pour introduire l'airbag (1) dans le boîtier modulaire (2).
